# EUROPEAN PATENT SPECIFICATION

(11) **EP 1 811 325 B1**
(45) Date of publication and mention of the grant of the patent: **12.10.2011**
(21) Application number: 05793682.5
(22) Date of filing: 12.10.2005
(51) Int. Cl.: G02B 7/04, G02B 7/02, H04N 5/225

(54) **CAMERA MODULE, AND PORTABLE TERMINAL AND INFORMATION TERMINAL WITH THE SAME**
KAMERAMODUL, TRAGBARES ENDGERÄT UND INFORMATIONSENDGERÄT DAMIT
MODULE CAMÉRA ET TERMINAL PORTABLE ET TERMINAL D INFORMATIONS ÉQUIPÉ DE CEUX-CI

(30) Priority: 20.10.2004 JP 2004305275; 20.10.2004 JP 2004305276; 10.08.2005 JP 2005231857; 10.08.2005 JP 2005231858
(43) Date of publication of application: 25.07.2007
(73) Proprietor: Kyocera Corporation, Kyoto-shi Kyoto 612-8501 (JP)
(72) Inventor: Shirono, Masahiro c/o Yokohama Office, Kyocera Corporation, Kanagawa 224-8502 (JP); Kobayashi, Hirokazu c/o Yokohama Office, Kyocera Corporation, Kanagawa 224-8502 (JP); Kitamura, Nobuo c/o Yokohama Office, Kyocera Corporation, Kanagawa 224-8502 (JP); Araie, Keiji c/o Yokohama Office, Kyocera Corporation, Kanagawa 224-8502 (JP)
(74) Representative: Strehl, Peter
(86) International application number: PCT/JP2005/018795
(87) International publication number: WO 2006/043456

(56) References cited:
- JP-A- 8 179 184
- JP-A- 10 090 584
- JP-A- 2003 244 976
- JP-A- 2004 007 914
- JP-A- 2004 187 384
- US-A- 5 644 440

## Description

### Technical Field

The present invention relates to a camera constituted to be small and light, and a portable terminal and an information terminal including this camera module.

### Background Art

In recent years, with high pixilation of an image pickup device (a CCD), a camera module for use in a portable terminal such as a cellular phone is required to have functions such as a high-speed high-precision auto-focus (AF) function and a focal length change (zoom) function which are similar to those of a usual electronic camera (a digital camera). Furthermore, with miniaturization and lightening of the portable terminal itself, it is necessarily demanded that the camera module should be miniaturized and lightened.

In order to perform auto-focusing and changing of a focal length (zooming) in such a camera module, a lens unit needs to be moved in an optical axis direction. To achieve this, in a conventional technology, as described in, for example, Patent Document 1, a mechanism in which a cylindrical cam disposed on a side surface of an optical system is driven with a motor to drive a zoom lens frame and an AF lens frame, a mechanism in which a cylindrical cam disposed adjacent to a lens frame is similarly driven with the motor to thereby move the auto-focusing lens frame and the zoom lens frame to switch two telephoto and macro points and the like are used.

Furthermore, there is a camera module in which not only the cylindrical cam but also the auto-focusing lens frame and the zoom lens frame are constituted to be driven with an auto-focusing lead screw and a zooming lead screw, respectively. A lens closest to a subject side is fixed to a front surface of a case. Moreover, these lead screws are arranged at a corner of one side of the case, and the case is provided with guide support portions of the lens frames. Furthermore, the zooming lead screw is disposed in a first quadrant around an optical axis, the focusing lead screw is disposed in a second quadrant, and guide shafts of the lens frames are arranged in a third quadrant. Moreover, there are a camera module having a mechanism in which lens units are moved in the optical axis direction by use of a helicoid mechanism and the like.

However, in such a conventional camera module using the cylindrical cam, the lead screws, helicoids and the like, an electromagnetic motor and a pulse motor having rotors are generally used as driving sources of the module. However, the electromagnetic motor using such a rotor also requires an electromagnet and a permanent magnet around the rotor. Even when a length in an axial direction is reduced, a columnar portion is indispensable. This hampers the miniaturization of the camera module. Furthermore, noises and the like are generated.

Therefore, in order to solve shortcomings of such an electromagnetic motor, as the driving source which moves the lens frames in the optical axis direction, a frictional driving type driving source has heretofore been used in which a mechanical vibrator is constituted of a piezo element (a PZT) to generate a mechanical strain in accordance with changes of an electric field and a magnetic field. The rotor or a slider is brought into contact with this mechanical vibrator to take out a vibration of the mechanical vibrator as an output. Such a frictional driving type driving source operates at a low speed but has advantages that the source has a high torque and excellent response and controllability, can finely be positioned, has a holding torque (or a holding force) when not energized, has excellent quietness and is small and light.

For example, in Patent Document 2, an optical apparatus is disclosed in which the piezo element is disposed on the lens frame to drive the lens like a measuring worm. In Patent Documents 3 and 4, a lens movement device is disclosed in which the piezo element is brought into contact with an end portion of a feed screw for driving the lens frame to impart a stepping rotation to the screw. It is proposed in Patent Document 5 that the lens frame be moved by the feed screw which is brought into contact with an electrical-mechanical energy conversion element vibrated by applying an electrical signal to the element and which is rotated by the vibration of the conversion element. In addition, it is proposed in Patent Document 6 that a linear driving type vibration wave actuator (the piezo element) be used. The piezo element abuts on the lens frame to directly drive the lens frame.

Furthermore, a constitution is proposed in which one of the lens frame, a lens barrel and a lens holder is provided with the piezo element, and the lens is driven by an elliptic movement of the piezo element. Alternatively, the rotor is disposed at an end portion of the lead screw, and the piezo element is disposed so as to abut on an outer peripheral surface of the rotor to rotate the rotor and move the lens. Such a frictional driving type driving source using the piezo element (PZT) or the like is described in detail in, for example, Patent Documents 7 to 12 and the like.

However, in such a frictional driving type driving source using the piezo element (PZT) or the like, a portion where the piezo element abuts on a driven article is shaved by friction, shavings as powder dust pollute the lenses, and ghost, flare or the like is sometimes caused. As a method of coping with such powder dust in an optical system, a structure is disclosed in, for example, Patent Documents 13, 14 in which an adhesive is applied to the inside of the optical system to capture the powder dust flied and scattered by rotation of a polygonal mirror, or an opening around an optical path is blocked with an adhesive tape to adsorb the dust. Another structure is disclosed in Patent Documents 15, 16 in which the dust is adsorbed using an electrostatic adsorbing material externally from an optical axis region, or a resin material is used in a rotary polygonal mirror bearing to attach wear powder generated by the friction to a bearing portion by frictional charging.

Furthermore, there is a linear actuator including a slider frictionally engaged with a driving shaft which performs a reciprocating motion or an expanding and contracting motion so that the slider is movable along the driving shaft. The driving shaft is driven asymmetrically forwards and backwards to move the slider in an arbitrary direction. In such a linear actuator, for a stable operation, the slider needs to be configured to smoothly move along the driving shaft with a predetermined frictional force in a non-driving state.

However, in the linear actuator using such an electrostrictive element and the frictional driving type driving source, a portion where a driving portion abuts on a driven portion is shaved by the friction after use for a long period, depending on a use environment. The shavings as powder dust pollute the lenses, and the ghost, flare and the like are generated. Corroded objects generated by corrosive gases such as hydrogen sulfide, Nox and ozone and oxidizing gases, and attached objects such as dust and wear powder are sometimes deposited. Even under a high-temperature high-humidity environment, composition components are liberated and attached to surfaces of materials, depending on types of the driving shaft and a slider material. As a result of pollution of a frictional engagement portion between the slider and the driving shaft, the frictional force is increased, and the slider does not smoothly move in some case.

Patent Document 1: Japanese Patent Application Laid-Open No. 7-63970;
Patent Document 2: Japanese Patent Application Laid-Open No. 5-107440;
Patent Document 3: Japanese Patent Application Laid-Open No. 4-212913;
Patent Document 4: Japanese Patent Application Laid-Open No. 4-212910;
Patent Document 5: Japanese Patent Application Laid-Open No. 8-47273;
Patent Document 6: Japanese Patent Application Laid-Open No. 7-104166;
Patent Document 7: Japanese Patent Application Laid-Open No. 7-184382;
Patent Document 8: Japanese Patent No. 2980541;
Patent Document 9: Japanese Patent Application Laid-Open No. 9-37575;
Patent Document 10: Japanese Patent Application Laid-Open No. 2000-40313;
Patent Document 11: Japanese Patent Publication No. 2002-522637;
Patent Document 12: Japanese Patent Application Laid-Open No. 2003-501988;
Patent Document 13: Japanese Patent Application Laid-Open No. 6-148550;
Patent Document 14: Japanese Patent Application Laid-Open No. 7-77745;
Patent Document 15: Japanese Patent Application Laid-Open No. 9-294193; and
Patent Document 16: Japanese Patent Application Laid-Open No. 9-127451.

### Disclosure of the Invention

### Problem to be solved by the Invention

However, since technologies described in Patent Documents 2 to 6 are mechanisms to drive a camera lens having a usual size and a camera module for use in a portable terminal such as a cellular phone is constantly required to be miniaturized, the mechanisms are too large to be applied to such a portable terminal.

Moreover, by technologies described in Patent documents 13 to 15, dust floating in an optical system and flied and scattered foreign objects can be adsorbed, but that does not deal with shavings generated by friction. In a technology described in Patent Document 16, wear powder is simply adsorbed by frictional charging, and if rotation stops, the dust might float, and the technology cannot be a radical solution.

Therefore, an object of the present invention is to provide a camera module, and a portable terminal and an information terminal including this camera module in which an auto-focusing (AF) function and a zoom function are incorporated using a frictional driving type driving source such as a piezo element and which are constituted to be small and light and in which problem of shavings generated at a time when the piezo element frictionally abuts on a driven member and the like can be solved.

US 5644440 A discloses an optical apparatus with the features of the preamble of present claims 1 and 8.

### Means for solving the Problem

To solve the above problems, the present invention provides a camera module as defined in claims 1 and 8. One aspect proposes a camera module having: a lens holding section which holds at least one or more optical lenses and which includes a shaft hole portion; a shaft member which is inserted into the shaft hole portion and which is substantially disposed in parallel with an optical axis; and a piezo element including, at an end portion thereof, an operating portion which abuts on the shaft member, the element being disposed in the vicinity of the shaft hole portion of the lens holding section, wherein a dust collecting member is disposed in the vicinity of the shaft hole portion.

Second aspect is that in the camera module, the dust collecting member is disposed on a side on which the operating portion of the piezo element in the shaft hole portion abuts on the shaft member.

Third aspect is that in the camera module, the shaft hole portion is provided with the dust collecting member disposed on one side thereof, and a sliding portion disposed on a side opposite to the dust collecting member via the shaft member, and the shaft hole portion is formed so as to surround the shaft member.

According to the fourth aspect , a camera module is provided with a lens holding section which holds at least one or more optical lenses and which includes a shaft hole portion; a shaft member which is inserted into the shaft hole portion and which is substantially disposed in parallel with an optical axis; and a piezo element including, at an end portion thereof, an operating portion which abuts on the shaft member, the element being disposed in the vicinity of the shaft hole portion of the lens holding section, wherein an adhesive member is disposed in the vicinity of the shaft hole portion.

Fifth aspect is that in the camera module, an arrangement position of the adhesive member in the shaft hole portion substantially corresponds, in an optical axis direction, to an arrangement position of the operating portion of the piezo element, which is disposed on a side opposite to the adhesive member via the shaft member.

Sixth aspect is that in the camera module, the shaft hole portion communicates with a holding portion of the piezo element via a side on which the piezo element is disposed, and the adhesive members are disposed on a base portion substantially facing the operating portion of the piezo element, a side wall on a lens side and a side wall facing the lens side, respectively.

Seventh aspect is that in the camera module, a dust collecting member is disposed on a side on which the operating portion in the shaft hole portion abuts on the shaft member.

Eighth aspect is that in the camera module, the shaft hole portion surrounds the shaft member, a sliding portion which abuts on the shaft member is disposed on one side, and an abutment portion of the piezo element is disposed on an opposite side of the sliding portion via the shaft member.

Ninth aspect is that, in the above mentioned camera modules, the surface of an abutment portion of the shaft member on the operating portion is treated to be rougher than the surface of a non-abutment portion of the shaft member.

Tenth aspect is that, in the camera modules, the lens holding section includes a first elastic member which urges the piezo element in a direction substantially crossing an optical axis direction at right angles so that the operating portion abuts on the shaft member, and a second elastic member which urges the operating portion in the optical axis direction.

According to eleventh aspect , a portable terminal comprises: a camera module including a lens holding section which holds at least one or more optical lenses and which includes a shaft hole portion, a shaft member which is inserted into the shaft hole portion and which is substantially disposed in parallel with an optical axis, a piezo element including, at an end portion thereof, an operating portion which abuts on the shaft member, the element being disposed in the vicinity of the shaft hole portion of the first lens holding section, and a dust collecting member and/or an adhesive member disposed in the vicinity of the shaft hole portion; an operation member; a display ; a battery; a communication unit; and a housing which stores the camera module, the operation member, the display, the battery and the communication unit and which has a thickness limited substantially to a height of the camera module.

According to twelfth aspect, a camera module comprises an electrostrictive element; a driving shaft which is connected to the electrostrictive element on one end side in an axial direction and which performs a reciprocating motion or an expanding and contracting motion in the axial direction by a voltage applied to the electrostrictive element; and a lens holding section connected to a sliding member which frictionally engages with at least a part of a peripheral surface of the driving shaft, wherein a dust collecting member is disposed in the vicinity of the sliding member.

Thirteenth aspect is that in the camera module of the twelfth aspect, a gap is disposed in a direction crossing a sliding direction at right angles on a side on which the sliding member faces the driving shaft, and the dust collecting member is disposed in the gap so as to abut on the driving shaft.

Fourteenth aspect is that, in the camera module, the dust collecting member is disposed at an end portion of the sliding member on a side of the electrostrictive element, where the dust collecting member faces the driving shaft or a peripheral surface of the electrostrictive element.

Fifteenth aspect is that in the camera module, gaps of the sliding member are arranged at least at two portions of the driving shaft on opposite end sides in the axial direction, and the dust collecting members are disposed in the two gaps, respectively.

Sixteenth aspect is that in the camera module, gaps of the sliding member are arranged at least at two or more portions of the driving shaft in the axial direction, and the adhesive member is disposed in at least one of the gaps.

According to seventeenth aspect , a camera module comprises: an electrostrictive element; a driving shaft which is connected to the electrostrictive element on one end side in an axial direction and which performs a reciprocating motion or an expanding and contracting motion in the axial direction by a voltage applied to the electrostrictive element; and a lens holding section connected to a sliding member which frictionally engages with at least a part of a peripheral surface of the driving shaft, wherein an adhesive member is disposed in the vicinity of the sliding member.

Eighteenth aspect is that in the camera module of the seventeenth aspect, a gap in a direction crossing a sliding direction at right angles is disposed on a side on which the sliding member faces the driving shaft, and the adhesive member is disposed in the gap.

Nineteenth aspect is that in the camera module, a dust collecting member is disposed at an end portion of the sliding member on a electrostrictive element side so as to face the driving shaft or a peripheral surface of the electrostrictive element.

Twentieth aspect is that in the camera module, gaps of the sliding member are disposed at two or more portions of the driving shaft in the axial direction, and a dust collecting member is disposed in at least one of the gaps.

Twenty-first aspect is that in the camera module, gaps of the sliding member are arranged at least at two portions of the driving shaft on opposite ends in the axial direction, and dust collecting members are disposed in the two gaps, respectively.

Twenty-second aspect is that in the camera module, the sliding member frictionally engages with the driving shaft at two places.

Twenty-third aspect is that in the camera module, the sliding member frictionally engages with the driving shaft at two places, and the adhesive member is disposed between the two places.

Twenty-fourth aspect is that in the camera module of twelfth or seventeenth aspect, the surface of an abutment portion of the driving shaft on the sliding member is treated to be rougher than the surface of a non-abutment portion of the shaft member.

According to twenty-fifth aspect , an information terminal comprises: a camera module including a lens holding section which holds at least one or more optical lenses, a driving shaft which is connected to an electrostrictive element on one end side in an axial direction and which performs a reciprocating motion or an expanding and contracting motion in the axial direction by a voltage applied to the electrostrictive element, a sliding member which is connected to the lens holding section to frictionally engage with at least a part of a peripheral surface of the driving shaft, and at least one dust collecting member and/or at least one adhesive member disposed in a gap disposed in a direction crossing a sliding direction at right angles on a sliding member side facing the driving shaft; an operation member; a display; a battery; a communication unit; and a housing which stores the camera module, the operation member, the display, the battery and the communication unit and which has a thickness limited substantially to a height of the camera module.

### Effect of the Aspects

According to the first aspect, even when the operating portion of the piezo element abuts on the shaft member to generate shavings, the shavings are collected by the dust collecting member disposed in the vicinity of the shaft hole portion. Therefore, it is possible to prevent lenses from being polluted by the shavings as powder dust and to prevent ghost and flare from being caused. Moreover, the camera module having an auto-focusing (AF) function and a zooming function can be constituted to be small and light.

According to the second aspect, the dust collecting member is disposed on the side on which the operating portion of the piezo element in the shaft hole portion abuts on the shaft member. That is, the dust collecting member is disposed in the vicinity of a place where the shavings are generated, and the shavings can be collected before they fly and scatter.

According to the third aspect, the shaft hole portion is provided with the dust collecting member disposed on one side thereof, and a sliding portion disposed on the side opposite to the dust collecting member via the shaft member, and the shaft hole portion is formed so as to surround the shaft member. By this constitution, the shavings do not fly or scatter from this shaft hole portion, are collected by the dust collecting member and are prevented from exerting influences.

According to the fourth aspect, even when the operating portion of the piezo element abuts on the shaft member to generate the shavings, the shavings can be captured by the adhesive member disposed in the vicinity of the shaft hole portion. It is possible to prevent the lenses from being polluted by the shavings as the powder dust and to prevent the ghost, the flare and the like from being caused. Moreover, the camera module having the auto-focusing (AF) function and the zooming function can be constituted to be small and light.

According to the fifth aspect, the position in the shaft hole portion where the adhesive member is disposed substantially corresponds, in the optical axis direction, the position where the operating portion of the piezo element disposed on the opposite side via the shaft member is disposed. In consequence, the shavings can be captured and collected before flying and scattering.

According to the sixth aspect, the shaft hole portion connects the piezo element on the side on which the piezo element is disposed, and the adhesive members are disposed on the base portion substantially facing the operating portion of the piezo element, the side wall on the lens side and the side wall facing the lens side, respectively. In consequence, the shavings can be captured and collected before flying and scattering.

According to the seventh aspect, the dust collecting member is disposed on the side on which the operating portion in the shaft hole portion abuts on the shaft member. Therefore, the shavings can be captured more effectively before flying and scattering.

According to the eighth aspect, the shaft hole portion surrounds the shaft member, the sliding portion which abuts on the shaft member is disposed on one side, and the abutment portion of the piezo element is disposed on the opposite side of the sliding portion via the shaft member. Therefore, the lens holding section can stably move the shaft member vertically.

According to the ninth aspect, the surface of the abutment portion of the shaft member on the operating portion is treated to be rougher than the surface of the non-abutment portion of the shaft member. In consequence, driving by the piezo element can more effectively be performed.

According to the tenth aspect, the lens holding section includes: the first elastic member which urges the piezo element in the direction substantially crossing the optical axis direction at right angles so that the operating portion abuts on the shaft member; and the second elastic member which urges the operating portion in the optical axis direction. Therefore, an appropriate urging force can be applied to the piezo element with a simple constitution.

According to the eleventh aspect, even when the operating portion of the piezo element abuts on the shaft member to generate the shavings, the shavings are collected by the dust collecting member disposed in the vicinity of the shaft hole portion. Therefore, it is possible to prevent the lenses from being polluted by the shavings as the powder dust and to prevent the ghost, the flare and the like from being caused. Moreover, the portable terminal having the auto-focusing (AF) function and the zooming function can be constituted to be small and light.

According to the twelfth aspect, even in a case where the shavings generated by sliding between the driving shaft and the sliding member in conjunction with the electrostrictive element, and attached objects such as corroded objects generated by a corrosive gas or an acid gas are generated, they are captured by the dust collecting member disposed in the vicinity of a sliding surface. It is possible to prevent the lenses from being polluted by the shavings and the attached objects as the powder dust and to prevent the ghost, the flare and the like from being caused. Therefore, even during use for a long period, an appropriate frictional force between the driving shaft and the shaft member can stably be maintained, and an operation defect of a linear actuator can be prevented. Furthermore, according to the present invention, the camera module having the auto-focusing (AF) function and the zooming function can be constituted to be small and light. It is to be noted that the vicinity of the sliding member may be any position of the sliding member facing the driving shaft, and includes a position facing the electrostrictive element.

According to the thirteenth aspect, the gap is disposed in the direction crossing the sliding direction at right angles on the side on which the sliding member faces the driving shaft, and the dust collecting member is disposed in the gap so as to abut on the driving shaft. Therefore, space can be saved, and the module can be miniaturized.

According to the fourteenth aspect, the dust collecting member is disposed at the end portion of the sliding member on the electrostrictive element side, where the dust collecting member faces the driving shaft or the peripheral surface of the electrostrictive element. Since the dust collecting member is disposed at the end portion on the electrostrictive element side, the generated shavings can effectively be collected.

According to the fifteenth aspect, the gaps of sliding member are arranged at least at two portions of the driving shaft on the opposite end sides in the axial direction, and the dust collecting members are disposed in the two gaps, respectively. Therefore, attached objects such as the shavings can effectively be removed. Especially, the dust collecting members are arranged at upper and lower end portions of the driving shaft from which the shavings are easily generated. In consequence, the shavings can be captured before flying and scattering.

According to the sixteenth aspect, the gaps of the sliding member are arranged at least at two or more portions of the driving shaft in the axial direction, and the adhesive member is disposed in at least one of the gaps. In consequence, the shavings which cannot be collected by the dust collecting member can adhesively be collected by the adhesive member, and a dust collecting performance is further improved.

According to the seventeenth aspect, even in a case where the shavings generated by the sliding between the driving shaft and the sliding member in conjunction with the electrostrictive element, and attached objects such as corroded objects generated by the corrosive gas or the acid gas are generated, they are captured by the adhesive member disposed in the vicinity of the sliding surface. It is possible to prevent the lenses from being polluted by the shavings and the attached objects as the powder dust and to prevent the ghost, the flare and the like from being caused. Therefore, even during the use for the long period, the appropriate frictional force between the driving shaft and the shaft member can stably be maintained, and the operation defect of the linear actuator can be prevented. Furthermore, according to the present invention, the camera module having the auto-focusing (AF) function and the zooming function can be constituted to be small and light. It is to be noted that the vicinity of the sliding member may be any position of the sliding member facing the driving shaft, and includes the position of the sliding member facing the electrostrictive element.

According to the eighteenth aspect, the gap is disposed in the direction crossing the sliding direction at right angles on the side on which the sliding member faces the driving shaft, and the adhesive member is disposed in the gap. Therefore, the space can be saved, and the module can be miniaturized.

According to the nineteenth aspect, the dust collecting member is disposed at the end portion of the sliding member on the side of the electrostrictive element so as to face the driving shaft or the peripheral surface of the electrostrictive element. Since the dust collecting member is disposed at the end portion on the electrostrictive element side, the shavings which cannot be collected by the adhesive member can be collected effectively.

According to the twentieth aspect, the gaps of the sliding member are disposed at two or more positions of the driving shaft in the axial direction, and the dust collecting member is disposed in at least one of the gaps. In consequence, the shavings which cannot completely be collected by the adhesive member can be collected by the dust collecting member, and an attached object collecting performance is further improved.

According to the twenty-first aspect, the gaps of the sliding member are disposed in at least two portions of the driving shaft on opposite ends in the axial direction, and the dust collecting members are disposed in the two gaps, respectively. Attached objects such as the shavings can effectively be removed. Especially, the dust collecting members are disposed at upper and lower end portions of the driving shaft where the shavings are easily generated. In consequence, the shavings can be captured before flying and scattering.

According to the twenty-second aspect, the sliding member frictionally engages with the driving shaft at two places. Therefore, the sliding places are scattered, concentration of pressed places of the driving shaft is avoided to inhibit the generation of the shavings, and the optical axis of each lens can further be stabilized.

According to the twenty-third aspect, the adhesive member is disposed between the two places. Therefore, without adding any space for disposing the adhesive member, the adhesive member can be disposed.

According to the twenty-fourth aspect, the surface of the abutment portion of the driving shaft on the sliding member is treated to be rougher than the surface of the non-abutment portion of the shaft member. Therefore, the driving by the electrostrictive element can more effectively be performed, and a frictional loss of the sliding surface can be reduced.

According to the twenty-fifth aspect, the camera modules described in the twelfth to twenty-fourth aspects are incorporated, and the information terminal having the auto-focusing (AF) function and the zooming function can be constituted to be small and light.

### Brief Description of the Drawings

FIG. 1(A) is an appearance perspective view of a camera module of an embodiment viewed from a subject side lens direction, and (B) is an appearance perspective view viewed from an image pickup element side;
FIG. 2(A) is a perspective view from which an image pickup element module is removed, and (B) is a perspective view from which a side cover is further removed in the camera module of the embodiment of FIG. 1(B) viewed from the image pickup element side;
FIG. 3 is an exploded diagram showing a constitution of the image pickup element module;
FIG. 4(A) is a perspective view from which an image pickup element side lower cover is removed, (B) is a perspective view from which a first lens holding frame holding a third lens unit is removed, and (C) is a perspective view from which a second lens holding frame holding a second lens unit is removed in the camera module of Embodiment 1;
FIG. 5 is a perspective view showing how electrical components such as an inductor, a sensor and a capacitor are attached;
FIG. 6 is a perspective view showing how a first shaft member (a motor shaft), a second shaft member (a guide shaft) and a subject side lens are attached;
FIG. 7 is an exploded diagram of the second lens holding frame which holds the second lens unit;
FIG. 8 shows a plan view (A) of the second lens holding frame which holds the second lens unit, and a perspective view (B) from which a flexible substrate is omitted as viewed from a piezo element side;
FIG. 9 shows a perspective view (A) showing a relation between the first shaft member (the motor shaft) and the second shaft member (the guide shaft) of the second lens holding frame which holds the second lens unit, and a sectional view (B) showing an abutment state between the piezo element and the first shaft member (the motor shaft);
FIG. 10(A) is a plan view of the second lens holding frame which holds the second lens unit in another embodiment, and (B) is a sectional view showing an abutment state between the piezo element and the first shaft member (the motor shaft) and a dust collecting member and an adhesive member disposed on a first bearing portion;
FIG. 11 is an exploded diagram of the first lens holding frame which holds the third lens unit;
FIG. 12 shows lenses and an image pickup element constituting an optical system of the camera module according to the embodiment, (A) shows a state in which the lenses are arranged at a wide-angle position (wide), and (B) shows a state in which the lenses are arranged at a telephoto position (tele);
FIG. 13(A) is a perspective view of the piezo element for use in the camera module according to the embodiment, and (B), (C) are explanatory views of an operation principle;
FIG. 14 shows an example in which two rollers having flat surfaces facing the second shaft member (the guide shaft) are arranged in a V-shape in a guiding abutment portion of the lens holding frame, (A) is a sectional view, (B) is a side view viewed from the second shaft member (the guide shaft) side, and (C) is a perspective view;
FIG. 15 is a schematic sectional view of a camera module showing a driving portion according to Embodiment 2;
FIG. 16 shows a perspective view (A) of the camera module of FIG. 15 as viewed from a subject-side lens, and a perspective view (B) viewed from an image pickup element;
FIG. 17 is an operation explanatory view of the camera module according to Embodiment 2, shows a state (a) in which the lenses are arranged at a telephoto position (tele), and similarly shows a state (b) in which the lenses are at a wide-angle position (wide);
FIG. 18 shows diagrams of an abutment state between a sliding member and a driving shaft, and shows a side sectional view (a), a flat sectional view (b) and a main part sectional view (c);
FIG. 19 is a structure explanatory view of the camera module according to Embodiment 2, and shows a left side view (a), a top plan view (b), a right side view (c), a perspective view (d) viewed from below on the left, a perspective view (e) viewed from above ,on the right, a sectional view (f) cut along the line A-A of (b), similarly a sectional view (g) cut along the line B-B of (b), and a sectional view (h) cut along the line C-C of (b);
FIG. 20 shows a perspective view (A) showing the whole constitution of the camera module according to Embodiment 2, and a perspective view (B) in which a cover is attached; and
FIG. 21 is a diagram schematically showing one example of a cellular phone in which the camera module of Embodiment 2 is incorporated.

### Description of Reference Numerals

- 1: camera module
- 2: first lens unit
- 3: second lens unit
- 4: third lens unit
- 5: image pickup element
- 10: piezo element
- 15: spacer
- 27: second lens holding frame which holds the second lens unit
- 271: second lens holding frame main body
- 271a: first bearing portion
- 271b: second bearing portion
- 271c: piezo element holding portion
- 271d, 271e, 271f and 271g: piezo element position regulating ortions
- 271p: piezo element fixing portion
- 271q: sliding portion
- 271qa: first sliding portion
- 271qb: second sliding portion
- 271qc: sliding portion base portion
- 271r: dust collecting member
- 271s: adhesive member
- 272: spring member for urging the piezo element
- 272a: first elastic member
- 272b: second elastic member
- 272c: insulating member
- 272d: insulating member engagement pin
- 299: lens holding frame
- 69: spring receptacle
- 39: stable weight member
- 49: fixing frame
- 49a: sliding surface
- 59: sliding member
- 59a: sliding surface
- 79: spring member
- 89: electrostrictive element
- 99: driving shaft
- 109: dust collecting member
- 119: adhesive member
- 129: lens
- 139: circuit board
- 149: cover
- 169: communication flexible printed board
- 179: hall element
- 189: magnet
- 199: filter glass
- 209: image pickup element
- 219: guide shaft

### Best Mode for Carrying out the Invention

Embodiments of the present invention will hereinafter be described with reference to the drawings. However, dimensions, materials, shapes, relative arrangements and the like of constituting components described in the embodiments do not limit the scope of the invention.

### [Embodiment 1]

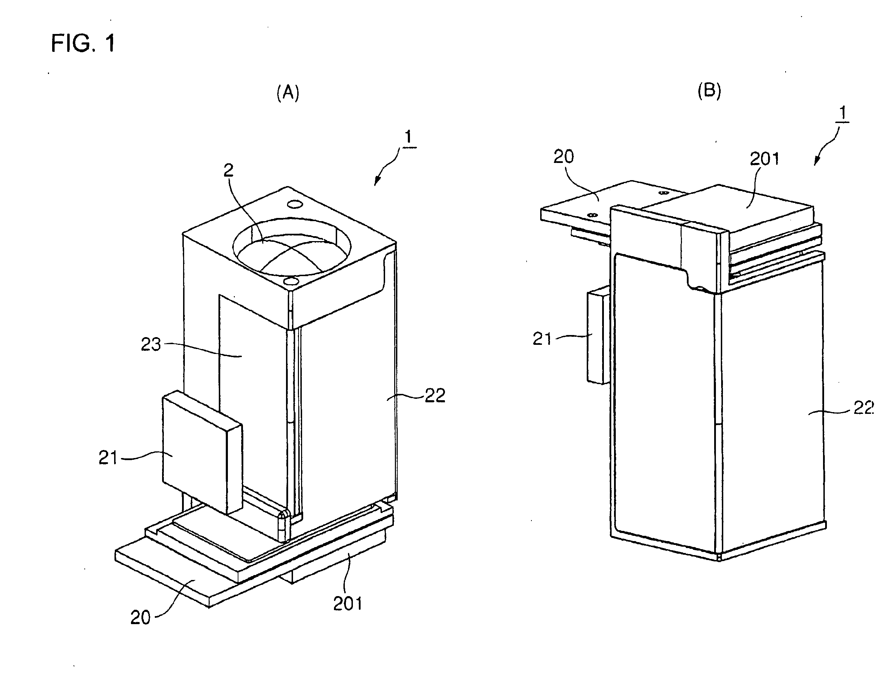

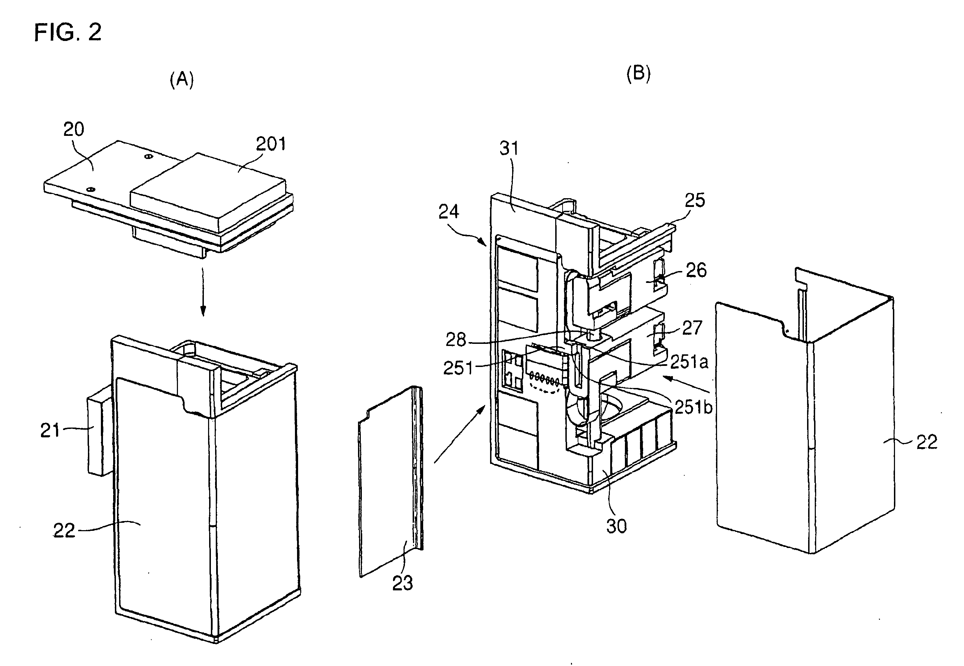

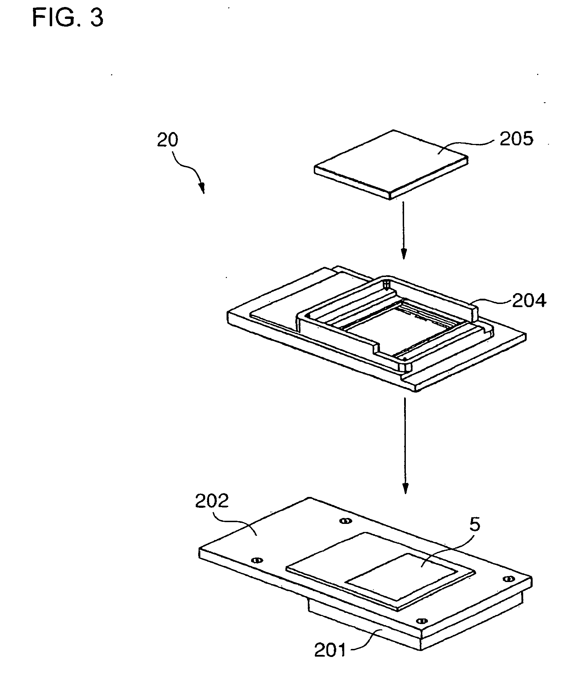

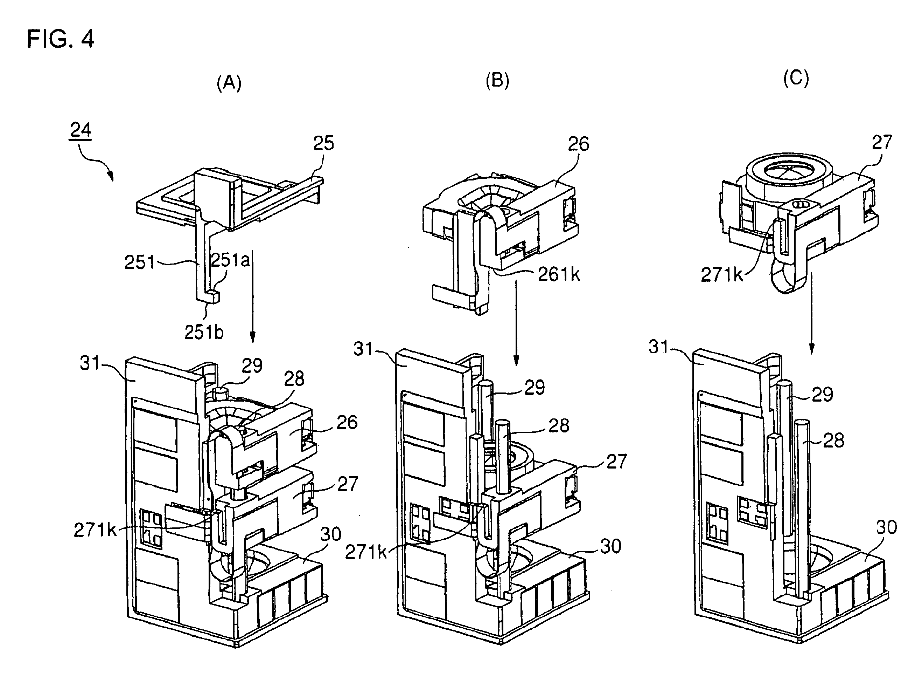

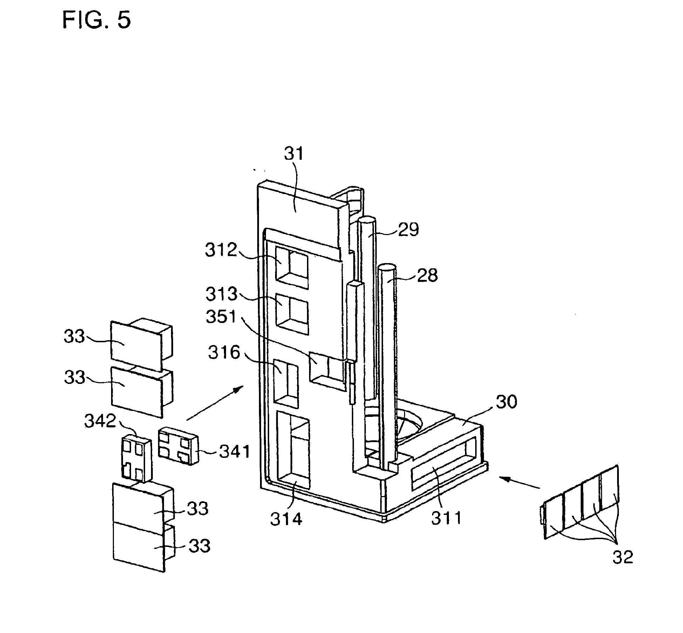

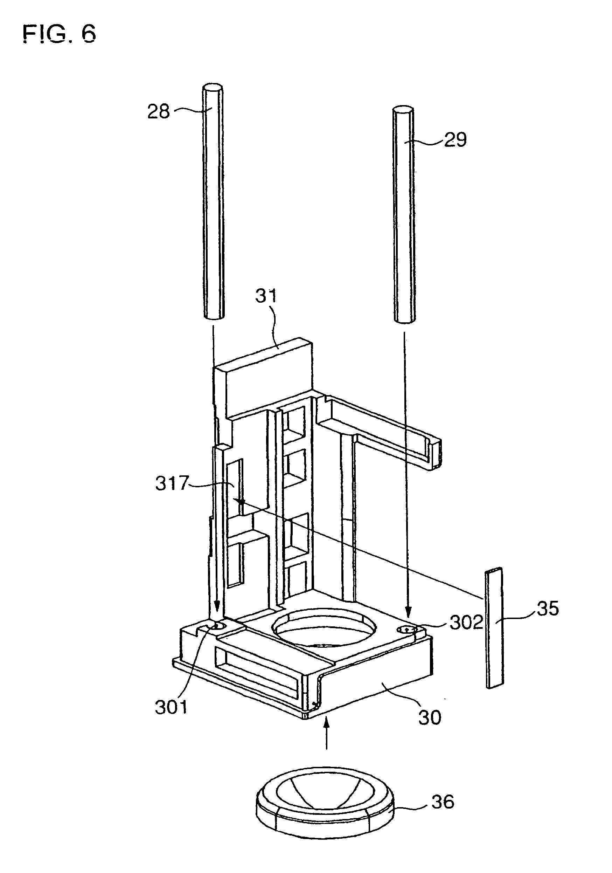

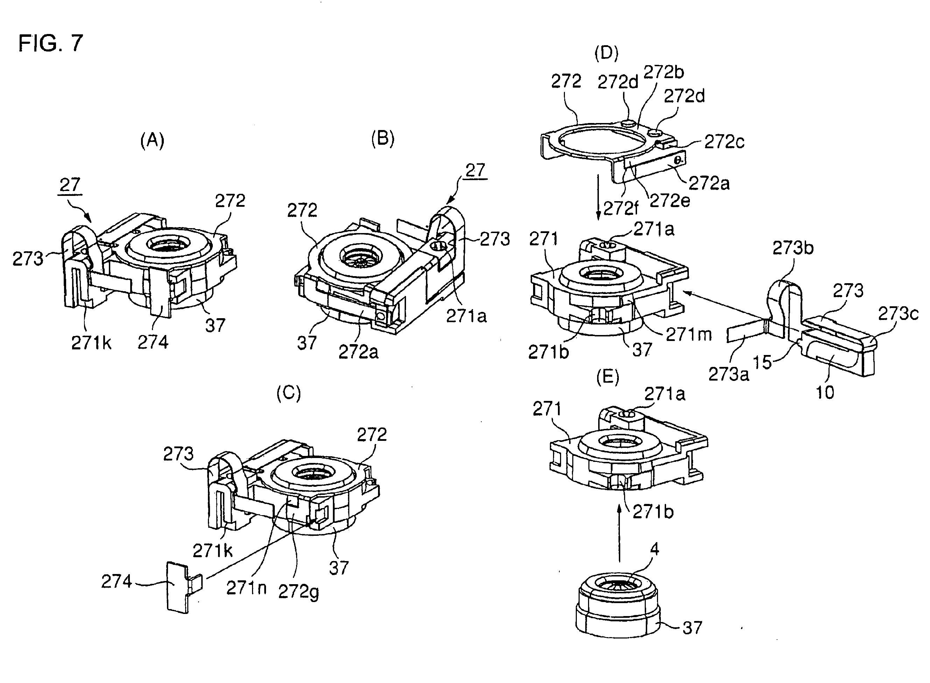

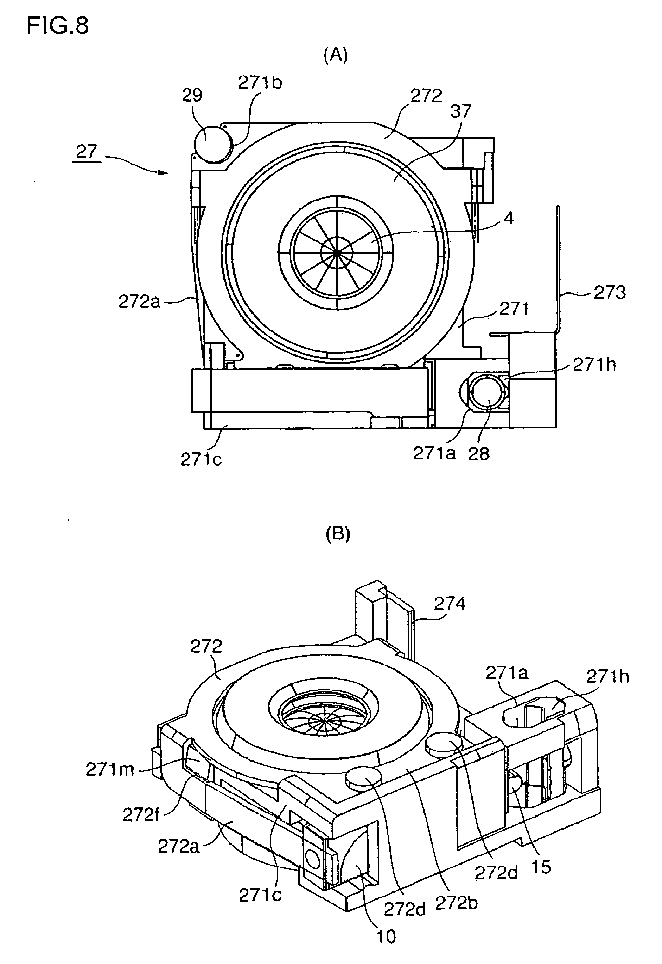

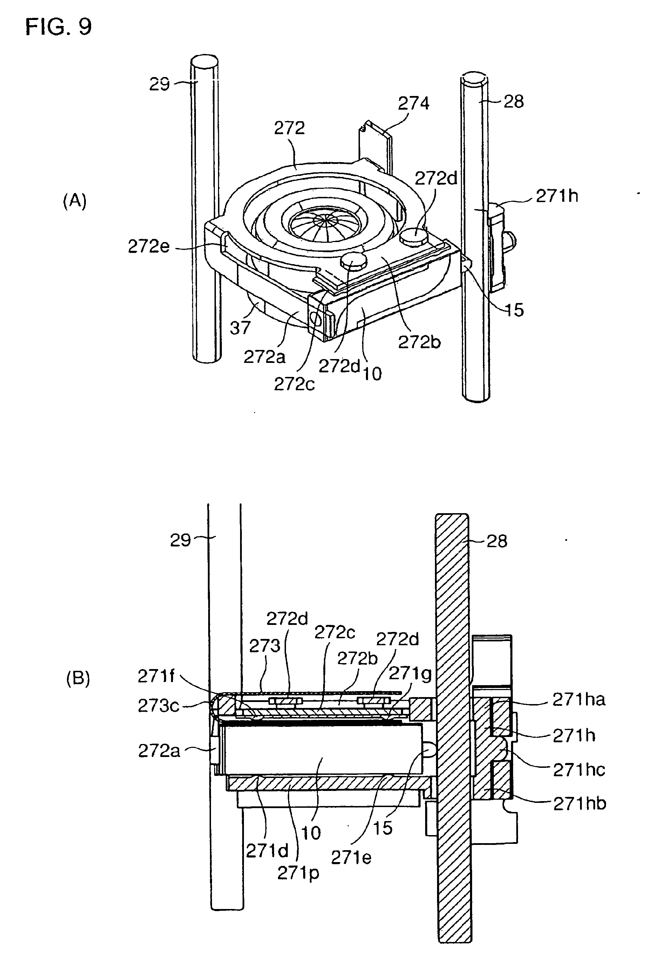

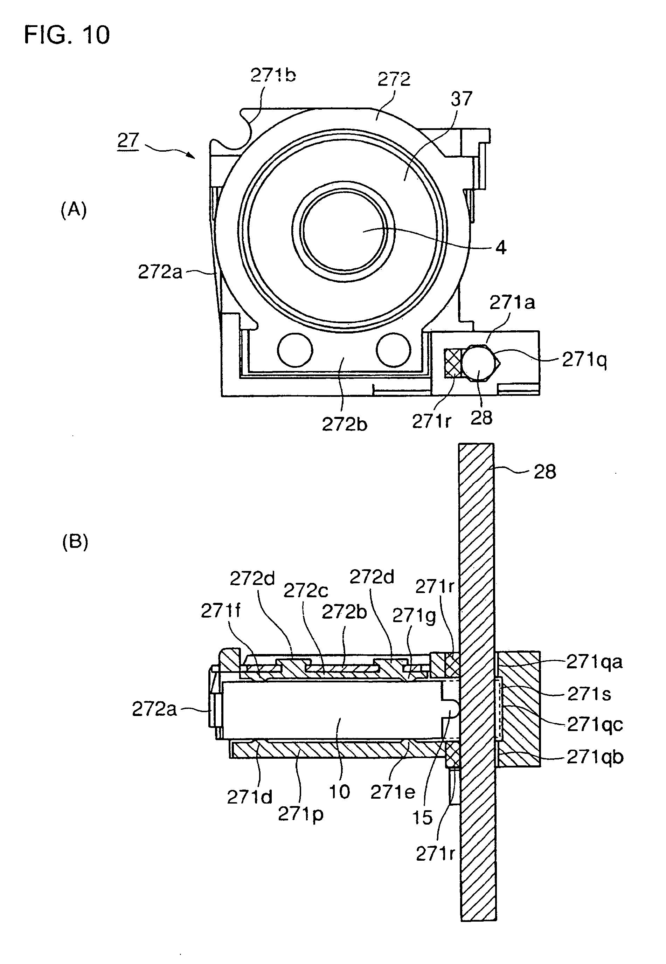

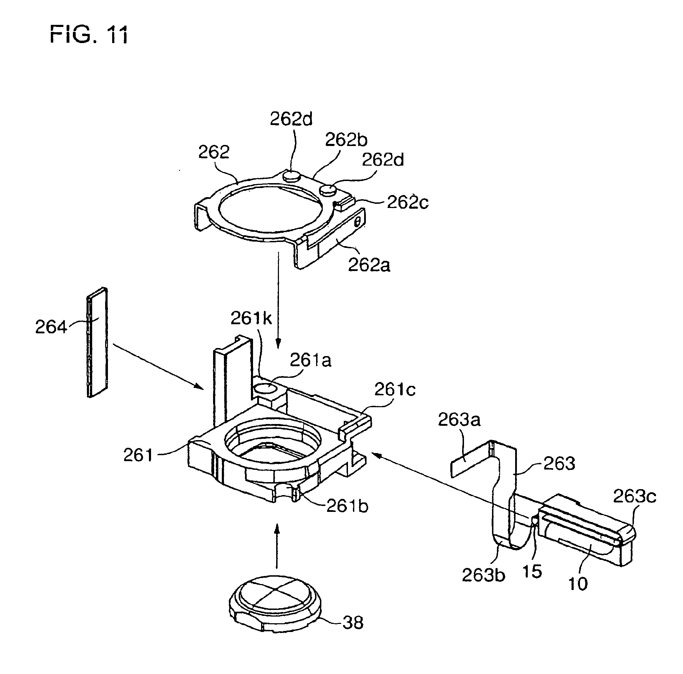

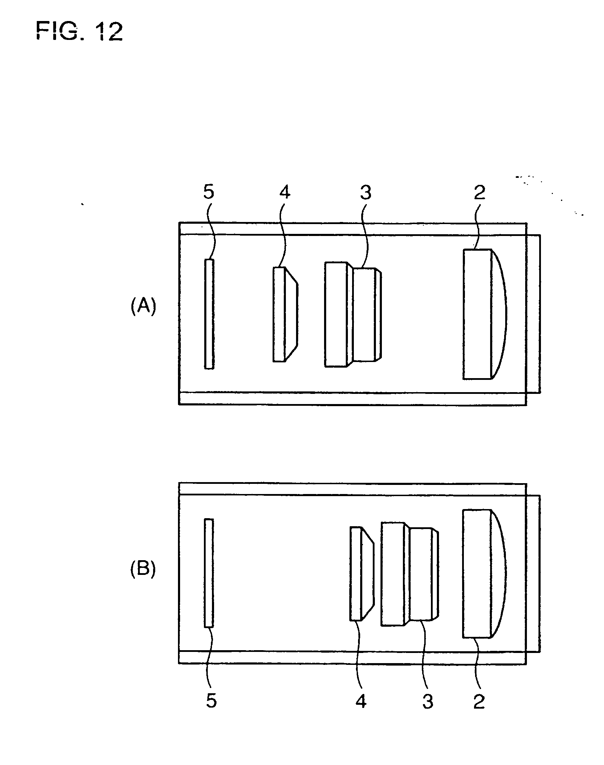

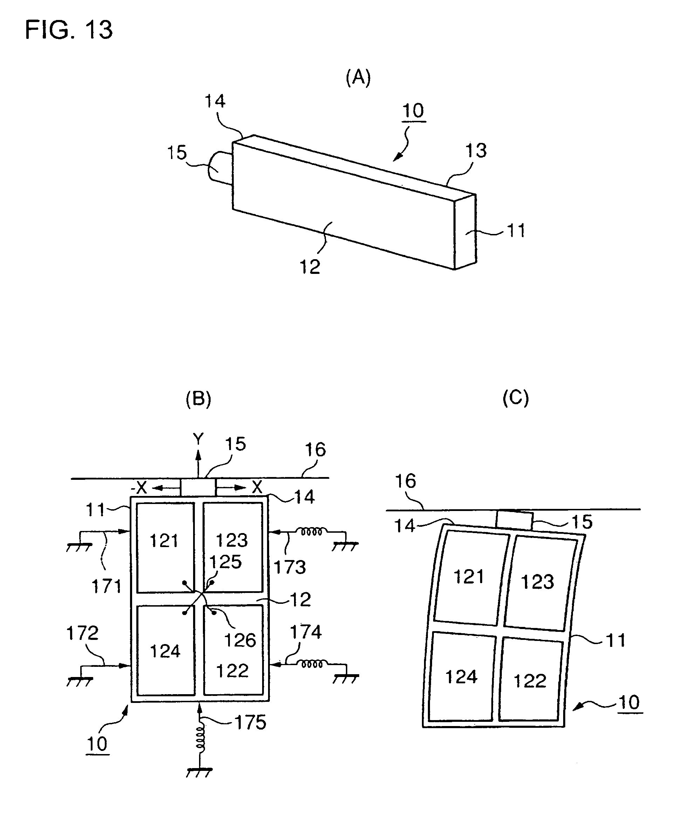

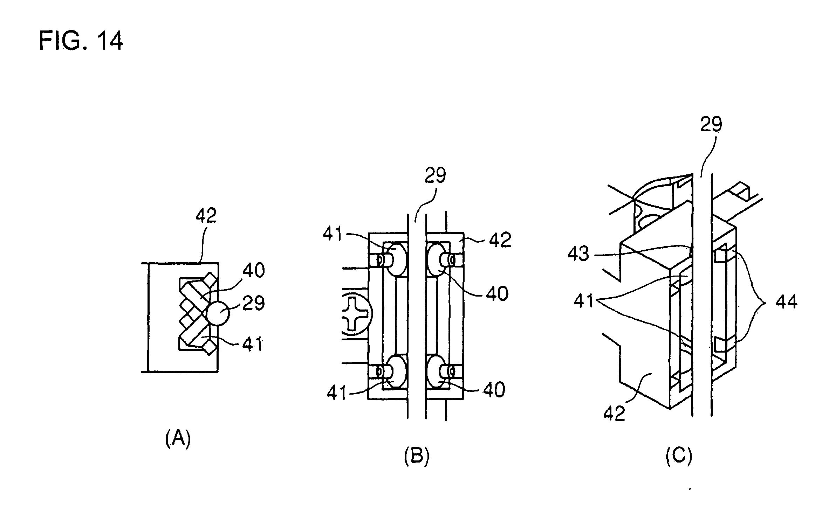

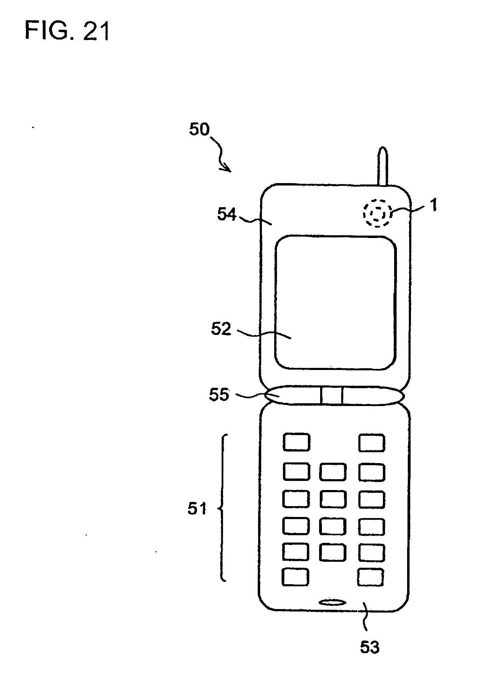

Embodiment 1 will be described with reference to FIGS. 1 to 14 and 21. FIG. 1(A) is an appearance perspective view of a camera module of Embodiment 1 viewed from a subject side lens direction, and (B) is an appearance perspective view viewed from an image pickup element side; FIG. 2(A) is a perspective view from which an image pickup element module is removed, and (B) is a perspective view from which a side cover is further removed in the camera module of the embodiment of FIG. 1(B) viewed from the image pickup element side; FIG. 3 is an exploded diagram showing a constitution of the image pickup element module; FIG. 4(A) is a perspective view from which an image pickup element side lower cover is removed, (B) is a perspective view from which a first lens holding frame holding a third lens unit is removed, and (C) is a perspective view from which a second lens holding frame holding a second lens unit is removed in the camera module of Embodiment 1; FIG. 5 is a perspective view showing how electrical components such as an inductor, a sensor and a capacitor are attached; FIG. 6 is a perspective view showing how a first shaft member (a motor shaft), a second shaft member (a guide shaft) and a subject side lens are attached; FIG. 7 is an exploded diagram of the second lens holding frame which holds the second lens unit; FIG. 8 shows a plan view (A) of the second lens holding frame which holds the second lens unit, and a perspective view (B) from which a flexible substrate is omitted as viewed from a piezo element side; FIG. 9 shows a perspective view (A) showing a relation between the first shaft member (the motor shaft) and the second shaft member (the guide shaft) of the second lens holding frame which holds the second lens unit, and a sectional view (B) showing an abutment state between the piezo element and the first shaft member (the motor shaft); FIG. 10(A) is a plan view of the second lens holding frame which holds the second lens unit in another embodiment, and (B) is a sectional view showing an abutment state between the piezo element and the first shaft member (the motor shaft) and a dust collecting member and an adhesive member disposed on a first bearing portion; FIG. 11 is an exploded diagram of the first lens holding frame which holds the third lens unit; FIG. 12 shows lenses and an image pickup element constituting an optical system of the camera module according to the embodiment, (A) shows a state in which the lenses are arranged at a wide-angle position (wide), and (B) shows a state in which the lenses are arranged at a telephoto position (tele); FIG. 13(A) is a perspective view of the piezo element for use in the camera module according to the embodiment, and (B), (C) are explanatory views of an operation principle; FIG. 14 shows an example in which two rollers having flat surfaces facing the second shaft member (the guide shaft) are arranged in a V-shape in a guiding abutment portion of the lens holding frame, (A) is a sectional view, (B) is a side view viewed from the second shaft member (the guide shaft) side, and (C) is a perspective view; and FIG. 21 is a diagram schematically showing one example of a cellular phone in which the camera module of Embodiment 1 is incorporated. In the drawings, the same constituting element is denoted with the same reference numeral.

FIG. 1(A) is the appearance perspective view of a camera module 1 of Embodiment 1 viewed from the subject side lens direction, and (B) is an appearance perspective view viewed from the image pickup element side. In the drawing, reference numeral 2 is a first lens unit on a subject side; 20 is an image pickup element module on which an image pickup element such as a CCD is mounted; 21 is an ASIC which controls the whole camera module; 22 is a first side cover which covers three surfaces of side surfaces of the camera module 1; 23 is a second side cover for shielding; and 201 is a digital signal processor (DSP) which processes an image picked up by an image pickup element such as the CCD. The camera module of Embodiment 1 is entirely constituted in a size of about 10×10×20 mm.

FIG. 2(A) is a perspective view from which the image pickup element module 20 is removed, and (B) is a perspective view showing a camera module main body 24 from which the first and second side covers 22, 23 are further removed and in which an image pickup lens, a lens movement mechanism and various electrical components are incorporated in the camera module 1 of the embodiment of FIG. 1(B) viewed from the image pickup element side. As shown in FIG. 2(B), the image pickup lens, the lens movement mechanism and various electrical components are incorporated in the main body 24, which is covered with the first and second side covers 22, 23. As shown in FIG. 2(B), the image pickup element module 20 is mounted to the main body 24, with the position being adjusted with respect to an optical axis and focusing being performed.

The camera module main body 24 shown in FIG. 2(B) is constituted of: a lower cover 25 on an image pickup element module 20 side; a first lens holding frame 26 which holds a third lens unit as described later; a second lens holding frame 27 which holds a second lens unit; a first shaft member (the motor shaft) 28 for vertically moving the first lens holding frame 26 and the second lens holding frame 27 themselves by piezo elements incorporated in these first lens holding frame 26 and second lens holding frame 27; a second shaft member (the guide shaft) 29 (not shown in FIG. 2(B)) which guides the first lens holding frame 26 and the second lens holding frame 27 while stopping rotation; an upper cover 30 which holds the first lens unit; an upright portion 31 which is raised from the upper cover 30 and on which the electrical components, etc are mounted; and the like. It is to be noted that a regulating member 251 disposed in the lower cover 25 regulates movement regions of the first lens holding frame 26 and the second lens holding frame 27 as described later in detail.

Moreover, as shown in the exploded diagram of FIG. 3, in the image pickup element module 20, an image pickup element 5 such as a CCD mounted on an image pickup element substrate 202 is covered with an image pickup element cover 204, and is further covered with a filter 205 for infrared cutting.

A schematic constitution of the camera module 1 according to Embodiment 1 has been described above. Details of the camera module 1 will hereinafter be described. Prior to the description, a constitution of an optical system for use in the camera module 1 of Embodiment 1, a constitution of the piezo element and an operation principle will be described with reference to FIGS. 12 and 13.

FIG. 12 is a diagram showing lenses and an image pickup element constituting an optical system of the camera module 1 according to Embodiment 1, FIG. 12(A) shows a state in which the lenses are arranged at the wide-angle position (wide), and (B) similarly shows a state in which the lenses are arranged at the telephoto position (tele). This optical system is constituted of a first lens unit 2 closest to a subject side; a focal length changing second lens unit 3 disposed on an image pickup element 5 side away from the first lens unit 2; and a third lens unit 4 for changing a focal length and focusing (focus adjustment), which is disposed on the image pickup element 5 side. Each of the lens units is constituted of at least one or more optical lenses. While a position of the first lens unit 2 is fixed, the second lens unit 3 and the third lens unit 4 move toward the image pickup element 5 in which the CCD and the like are incorporated, to bring the optical system into the wide-angle position (wide) as shown in (A). When the second lens unit 3 and the third lens unit 4 move toward the first lens unit 2 as shown in (B), the optical system is brought into the telephoto position (tele). While the second lens unit 3 is positioned, the third lens unit 4 moves forwards and backwards to perform the focusing.

In the camera module 1 of Embodiment 1, the second lens unit 3 and the third lens unit 4 are moved using the piezo elements incorporated in the lens holding frames 26, 27 which hold the lens units 3, 4, respectively. Since the second lens unit 3 and the third lens unit 4 can independently be driven, the focusing can be performed while continuously changing the focal length. The optical system can be constituted as a usual zoom lens or a double-focus lens. It is to be noted that an example in which two lens holding frames are used will hereinafter be described, but it is obvious that a plurality of lens frames may be arranged. Moreover, as described above, the piezo elements are incorporated in the lens holding frames which hold the second lens unit 3 and the third lens unit 4. Next, a constitution and an operation principle of the piezo element for use in Embodiment 1 will be described.

In FIG. 13 (A) is a perspective view of the piezo element for use in the camera module 1 of Embodiment 1, (B) shows the constitution of the piezo element, and (C) is an explanatory view of the operation principle. In a piezo element 10 for use herein, as described in detail in Patent Documents 7 to 12, a first surface 12 of a piezoelectric ceramic (the piezo element) 11 formed into a substantially rectangular plate-like outer shape in a longitudinal direction and a short direction in FIG. 13(A) is provided with four electrodes 121, 122, 123 and 124 as shown in FIG. 13(B), and the whole second surface 13 on an opposite side is provided with one electrode. Moreover, it is preferable that in the electrodes 121, 122, 123 and 124 of the first surface 12, the diagonally arranged electrodes 121 and 122, and 123 and 124 are electrically connected to each other by wires 125 and 126 arranged in the vicinities of connecting portions of the electrodes, respectively, and the electrode on the second surface 13 is grounded.

Moreover, on a third surface 14 in the short direction, a spacer 15 as an operating portion of a comparatively hard ceramic is preferably attached to the vicinity of the center of the side by, for example, an adhesive, and engaged with an object 16 as an abutment portion such as the shaft member or a wall surface to be relatively moved. Furthermore, as shown in FIG. 13(B), this piezoelectric ceramic (the piezo element) 11 is deformably supported by a pair of supports 171, 172 and supports 173, 174 and 175 provided with springs, which are fixed to a periphery of the ceramic at a position of a vibration node.

When a positive voltage is applied to the electrodes 121, 124 and a negative voltage is applied to the electrodes 122, 123 in the piezoelectric ceramic (the piezo element) 11 constituted in this manner, as exaggeratedly shown in FIG. 13(C), the piezoelectric ceramic (the piezo element) 11 is longer on the left side than on the right side in the drawing. Since the vibration node is supported by the supports 173, 174 and 175 provided with the springs, the ceramic can be deformed. Therefore, the ceramic moves toward the right of the object 16 with which the spacer 15 engages. Moreover, when any voltage is not applied, the piezoelectric ceramic (the piezo element) 11 returns to an original state. At this time, for example, in a case where an asymmetric voltage pulse having a falling time which is at least about four times longer than a rising time is applied to the electrodes, when a pulse falls, the spacer 15 engaged with the object 16 returns to a departure position of the spacer owing to a friction between the spacer 15 and the object 16 in the piezoelectric ceramic (the piezo element) 11. Therefore, the spacer 15 and the object 16 relatively move as much as a displacement at a time when the pulse rises. It is to be noted that when the voltage is applied in reverse, this piezoelectric ceramic (the piezo element) 11 deforms in a reverse direction. Therefore, the spacer 15 and the object 16 relatively move in the reverse direction.

When such a signal voltage as to continuously cause the deformation shown in FIG. 13(C) is applied to the piezoelectric ceramic (the piezo element) 11 in this manner, a relative position of the ceramic with respect to the object 16 is displaced owing to the friction between the spacer 15 and the object 16. Therefore, the ceramic constitutes a driving source having advantages that the source operates at a low speed but has a high torque and excellent response and controllability, can finely be positioned, has a holding torque (or a holding force) when not energized, has excellent quietness and is small and light.

The optical system constitution and the operation principle of the piezo element in the camera module 1 of Embodiment 1 have been described above. Subsequently, the camera module 1 of the embodiment will be described in more detail with reference to FIGS. 4 to 11. First, FIG. 4 shows the camera module 1 of Embodiment 1, (A) is a perspective view from which the image pickup element side lower cover 25 is removed, (B) is a perspective view from which the first lens holding frame 26 holding the third lens unit 4 is removed, and (C) is a perspective view from which the second lens holding frame 27 holding the second lens unit 3 is removed.

In the camera module main body 24, as shown in FIGS. 4(A), (B) and (C), the first lens holding frame 26 holding the third lens unit 4 and the second lens holding frame 27 holding the second lens unit 3 are inserted through the first shaft member (the motor shaft) 28 and the second shaft member (the guide shaft) 29, and are covered with the lower cover 25.

The lower cover 25 is provided with the regulating member 251 having regulating portions 251a, 251b disposed at portions bent at right angles. The regulating member fixes the first shaft member (the motor shaft) 28 and the second shaft member (the guide shaft) 29 in predetermined positions, and regulates movement regions of the first lens holding frame 26 and the second lens holding frame 27 in an optical axis direction. Therefore, as shown in FIG. 4(A), the regulating member extends between the first lens holding frame 26 and the second lens holding frame 27, and abuts on a regulated portion 261k (see FIGS. 4(B), 11) disposed on a first bearing portion 261a in the first lens holding frame 26 and a regulated portion 271k (see FIGS. 4, 21(A), (D)) disposed in the vicinity of a first bearing portion 271a in the second lens holding frame 27. Therefore, as apparent from FIG. 2(B), the movement region of the first lens holding frame 26 is regulated by the lower cover 25 on an image pickup element side and by the regulating portion 251a of this regulating member 251 on a subject side. The movement region of the second lens holding frame 27 is regulated by the regulating portion 251b of the regulating member 251 on the image pickup element side, and by the upper cover 30 on the subject side. Therefore, when driving the first lens holding frame 26 and the second lens holding frame 27, if a driving source runs away, the lens holding frames 26, 27 do not move in excess of a certain region, so that the camera module 1 will not be broken.

FIG. 5 is a perspective view showing how the electrical components which operate the camera module 1 are attached. Reference number 32 is a capacitor and 33 is an inductor. The capacitor 32 and the inductor 33 are used in boosting a driving voltage of the piezo element. Reference numerals 341, 342 are position detecting members for detecting positions of the first lens holding frame 26, the second lens holding frame 27 and the like in the optical axis direction. These electrical components are attached to an electrical component attachment hole 311 made in the upper cover 30 of the camera module main body 24, and attachment holes 312, 313, 314, 315 and 316 made in the upright portion 31.

FIG. 6 is a diagram showing attached states of the first shaft member (the motor shaft) 28, the second shaft member (the guide shaft) 29 and a subject side lens holder 36. The first shaft member (the motor shaft) 28 and the second shaft member (the guide shaft) 29 are inserted under pressure into shaft hole portions 301, 302 made in the upper cover 30, and fixed on the image pickup element side with the lower cover 25 as shown in FIG. 4(A). In the upright portion 31 of the camera module main body 24, a sensor tape to be used for detecting positions of the first lens holding frame 26 and the second lens holding frame 27 is put in a hole 317. The first lens unit holder 36 which integrally holds the first lens unit 2 is attached to a lens fixing hole 303 made in the upper cover.

FIGS. 7 to 11 show details of the first lens holding frame 26 and the second lens holding frame 27 of the camera module 1 described above. As described later, the first lens holding frame 26 and the second lens holding frame 27 are constituted substantially in the same manner.

In the second lens holding frame 27 which holds the second lens unit 3 in the camera module 1 of Embodiment 1, as shown in an exploded diagram of FIG. 7, the second lens unit 3 is integrally held. The second lens holding frame is constituted of a second lens unit holder 37 attached to a main body 271 of the second lens holding frame; a piezo element urging spring member 272 put in the main body 271 of the second lens holding frame; a flexible substrate 273; a position detecting member 274 for detecting a position of this second lens holding frame 27 and the like. Moreover, FIGS. 7(A) and (B) are perspective views of the second lens holding frame 27 viewed from different angles, (C) is a perspective view in which the position detecting member 274 is removed from this second lens holding frame 27, (D) is an exploded perspective view from which the spring member 272 for urging the piezo element and the flexible substrate 273 are removed, and (E) is an exploded perspective view from which the second lens unit holder 37 is further removed.

Moreover, in FIG. 9(A), the second lens holding frame main body 271 and the flexible substrate 273 are omitted from the second lens holding frame 27. The piezo element 10, the first shaft member (the motor shaft) 28, the second shaft member (the guide shaft) 29, the second lens unit holder 37, a sliding portion 271h disposed on the second lens holding frame 27 to abut on the first shaft member (the motor shaft) 28 and the spring member 272 for urging the piezo element are only shown. FIG. 9(B) is a sectional view similarly showing a state in which the operating portion 15 and the sliding portion 271h abut on the first shaft member 28.

As shown in FIGS. 7(D) and 9(A), the piezo element urging spring member 272 is constituted of a first elastic member 272a to urge the piezo element 10 held by the second lens holding frame main body 271 in a direction in which the operating portion 15 of the piezo element 10 abuts on the first shaft member 28, the direction substantially crossing the optical axis direction at right angles; a second elastic member 272b which urges the piezo element 10 in the optical axis direction; an insulating member 272c in which a resin or the like is used so that the second elastic member 272b does not come into contact with the piezo element 10 to become conductive; insulating member engagement pins 272d for engaging the insulating member 272c with the second elastic member 272b and the like. The insulating member 262c is fixed to the second elastic member 262b by passing the insulating member engagement pins 262d through hole portions made in the second elastic member 262b and the insulating member 262c to caulk the pins, or preparing the second elastic member 262b and the insulating member 262c by outsert molding. Moreover, the first elastic member 272a is formed of a piece bent along an extension of a cutout 272e disposed at one side to urge the piezo element 10 toward the first shaft member 28. Furthermore, the second elastic member 272b is formed of a piece of another side extended toward a piezo element holding portion 271c to urge the piezo element 10 in the optical axis direction. The spring member is constituted of an elastic member integrally formed by the first elastic member 272a and the second elastic member 272b.

Furthermore, this piezo element urging spring member 272 is fixed to the second lens holding frame main body 271 by an engagement system as shown in FIG. 7(D), when an engagement portion 272f of the first elastic member 272a is engaged with a first claw 271m (see FIGS. 7(D), 8(B)) for fixing the piezo element urging spring member disposed on the lens holding frame main body 271, and an engagement portion 272g of the piezo element urging spring member is engaged with a second claw 271n (see FIGS. 7(C)) for fixing the piezo element urging spring member. It is to be noted that in Embodiment 1 shown in FIGS. 7(D), 9(A), a case where the piezo element 10 is pressed downwards from above in the drawing by the piezo element urging spring member 272 has been described, but needless to say, the spring member may be constituted so as to be pressed from a reverse direction or from both upward and downward directions.

In addition, as shown in FIG. 7(D), an end portion 273a of the flexible substrate 273 is fixed to the camera module main body 24, and a portion 273b expands and contracts along with a vertical movement of the second lens holding frame 27. As shown in a sectional view of FIG. 9(B), a U-shaped portion 273c bypasses a portion of the second elastic member 272b of the piezo element urging spring member 272. The flexible substrate is connected to a terminal (not shown) on an operating portion 15 side of the piezo element 10 so that power is supplied to the substrate. It is to be noted that this flexible substrate 273 is constituted by coating a wiring line member with an insulating coating. Therefore, when the flexible substrate 273 is passed between the piezo element 10 and the second elastic member 272b in this manner, the insulating member 272c does not have to be used. In consequence, the second elastic member 272b may directly be provided with piezo element position regulating portions 271f, 271g, and the insulating member 272c may not be used. This flexible substrate 273 may be disposed not only on a piezo element urging spring member 272 side but also on an opposite piezo element fixing portion claw 271n side.

Moreover, FIG. 8(A) shows a plan view of the second lens holding frame 27, FIG. 8(B) is a perspective view from the piezo element side in which the flexible substrate 273 is removed, FIG. 9(A) shows a perspective view of a relation between the first shaft member (the motor shaft) 28 and the second shaft member (the guide shaft) 29, and FIG. 9(B) is a sectional view showing an abutment state between the operating portion 15 of the piezo element 10 and the first shaft member (the motor shaft) 28. As shown, the first shaft member (the motor shaft) 28 is passed through the first bearing portion 271a disposed on the main body 271 of the second lens holding frame. Moreover, the second shaft member (the guide shaft) 29 is passed through a second bearing portion 271b disposed substantially in a symmetric position with respect to an optical axis of the first bearing portion 271a. As shown in FIG. 7(E), the second lens unit holder 37 is inserted and fixed, and the operating portion 15 of the piezo element 10 abuts on the first shaft member (the motor shaft) 28 to move this second lens holding frame 27 vertically in a way described above with reference to FIG. 13. It is to be noted that the first bearing portion 271a and the second bearing portion 271b are shown as a hole (the first bearing portion 271a) and an open hole (the second bearing portion 271b); but it is obvious that the present invention is not limited to these shapes.

As shown in FIGS. 8(B), 9(B), the piezo element 10 itself is disposed in this second lens holding frame 27. The second lens holding frame is opened on a side opposite to the first shaft member (the motor shaft) 28 so that the piezo element 10 can be inserted. Moreover, an inner side surface of the frame parallel to the optical axis is guided by a fixed wall. On upper and lower surfaces of the frame in the optical axis direction, a position of a vibration node disposed at a piezo element fixing portion 271p is pressed so that the piezo element 10 can be deformed as shown in FIG. 13(C). Piezo element position regulating portions 271d, 271e correspond to the supports 173, 174 provided with the springs on the other side shown in FIG. 13. The second elastic member 272b as the spring is stored in the piezo element holding portion 271c (see FIG. 8(B)) provided with the piezo element position regulating portions 271f, 271g. The operating portion 15 of the piezo element 10 is urged by the first elastic member 272a so as to abut on the first shaft member 28 in a direction substantially crossing the optical axis direction at right angles, and urged and held by the second elastic member 272b in the optical axis direction.

Moreover, as described above, the first bearing portion 271a is disposed on the first shaft member (the motor shaft) 28 of the piezo element holding portion 271c through which the first shaft member 28 is inserted. On a side of the first shaft member 28 opposite to a side on which the operating portion 15 of the piezo element 10 abuts, the sliding portion 271h having a first sliding portion 271ha as a first V-shaped portion and a second sliding portion 271hb as a second V-shaped portion is supported by a shaft 271hc. The sliding portion is formed into a V-shape using a resin material or the like in which friction is reduced using polycarbonate blended with fluorine, PPS or the like. It is to be noted that at the first shaft member (the motor shaft) 28 on which the operating portion 15 of the piezo element 10 abuts, a frictional coefficient of an abutment side of the sliding portion 271h on a side opposite to the side on which the operating portion 15 abuts is reduced. In addition, for example, the surface of the first shaft member on which the operating portion 15 abuts may be treated to be rougher than that on a side on which the sliding portion 271h abuts, or the surface of the first shaft member on the side on which the sliding portion 271h abuts may be subjected to a lubricating treatment or the like. In consequence, an operation of the piezo element 10 is secured, and slippage of the sliding portion 271h is improved.

The first sliding portion 271ha and the second sliding portion 271hb of this sliding portion 271h are arranged at a predetermined distance from the operating portion 15 of the piezo element 10 in the axial direction of the first shaft member 28. Moreover, the operating portion 15 is substantially positioned between the first sliding portion 271ha and the second sliding portion 271hb. Furthermore, the operating portion 15 of the piezo element 10 is positioned substantially in a middle of a thickness of the second lens holding frame 27. The piezo element holding portion 271c is formed in this manner.

Therefore, this sliding portion 271h is pressed and held on this first shaft member 28 by the first elastic member 272a of the piezo element urging spring member.272 owing to reaction of the urging of the operating portion 15 of the piezo element 10 in a direction in which the portion abuts on the first shaft member 28. Furthermore, the first shaft member (the motor shaft) 28 is brought into linear contact with the sliding portion 271h as the V-shaped portion. Since this sliding portion 271h is formed using the material having the reduced friction, the second lens holding frame 27 can smoothly move vertically. The piezo element holding portion 271c and the second lens holding frame 27 are held with respect to the first shaft member 28 without falling. The operating portion 15 of the piezo element 10 can more securely abut on the first shaft member 28 without any bend or deviation to move the second lens holding frame 27 vertically.

Moreover, as shown in FIG. 8(A), in this second lens holding frame 27 at a position substantially symmetric with respect to the optical axis of the first bearing portion 271a, the second bearing portion 271b for passing the second shaft member (the guide shaft) 29 disposed in parallel with the optical axis is disposed using a resin material in which friction is reduced using polycarbonate blended with fluorine, PPS or the like. The second shaft member (the guide shaft) 29 stops rotation of the second lens holding frame 27. Moreover, the second lens holding frame 27 can be prevented from being bent and can smoothly be moved vertically. As shown in FIG. 8(A), the first bearing portion 271a and the second bearing portion 271b include the sliding portion 271h of the first bearing portion 271a substantially formed into a V-shape and the second bearing portion 271b formed so as to correspond to an outer shape of the second shaft member (the guide shaft) 29. However, for example, the sliding portion 271h of the first bearing portion 271a and the second bearing portion 271b may be constituted using a roller substantially having a V-shape. As shown in FIG. 14, cylindrical flat rollers 40, 41 may be stored in a bearing portion 42 so as to form a V-shape with respect to the first shaft member 28 and the second shaft member 29.

FIG. 14(A) is a plan view of this bearing portion 42, and FIGS. 14 (B) and (C) are a side view and a perspective view. The flat rollers 40, 41 are held in a V-shaped cut out portion 43 disposed in this bearing portion 42 so as to form a V-shape with respect to the shaft members 28, 29 by bearings 44 arranged in a U-shape. In a case where the bearing portion 42 is constituted in this manner, even if a manufacturing error is generated in the first lens holding frame 26 and the second lens holding frame 27 and a position of the second bearing portion 271b deviates from a normal position owing to thrust movements of the flat rollers 40, 41 crossing each other at right angles, the optical axes of the first lens holding frame 26 and the second lens holding frame 27 are not influenced by the thrust movements of the flat rollers 40, 41. This is because the second shaft member 29 is allowed to abut on a V-shaped valley formed at a time when the flat rollers 40, 41 are arranged so as to cross each other at right angles.

It is to be noted that the piezo element 10 is of the frictional driving type as described above. Therefore, when the operating portion 15 of the piezo element abuts on the first shaft member (the motor shaft) 28, shavings are generated. The shavings as powder dust sometimes pollute the lenses to generate ghost, flare or the like. One example for preventing this is shown in FIG. 10. The example is constituted so as to collect or attach the shavings so that they are prevented from being flied or scattered. It is to be noted that in the example shown in FIG. 10, an application to the second lens holding frame 27 described above will be described, but it is obvious that the first lens holding frame 26 can be constituted in the same manner.

FIG. 10(A) is a plan view of the second lens holding frame 27 which holds the second lens unit 3, and (B) is a sectional view showing an abutment state between the piezo element 10 and the first shaft member (the motor shaft) 28 and a dust collecting member 271r and an adhesive member 271s disposed on the first bearing portion 271a. In the drawing, reference numeral 271q is a sliding portion which is constituted of a first sliding portion 271qa and a second sliding portion 271qb and which abuts on the first shaft member (the motor shaft) 28 inserted into the first bearing portion 271a. In this structure, unlike the first bearing portion 271a shown in FIGS. 8, 9, the sliding portion 271h is not an independent component, the sliding portion 271q is constituted to form a part of the first bearing portion 271a, and the number of the components are reduced. Moreover, 271qc is a sliding portion base portion which connects this first sliding portion 271qa to the second sliding portion 271qb, 271r is the dust collecting member to collect the shavings generated at a time when the operating portion 15 of the piezo element 10 abuts on the first shaft member (the motor shaft) 28, and 271s is similarly the adhesive member shown by a dotted line.

Moreover, among these components, as apparent from FIG. 10(B), the dust collecting member 271r is a portion constituted by extending a part of the piezo element holding portion 271c on a side of the first bearing portion 271a on which the operating portion 15 of the piezo element 10 abuts on the first shaft member (the motor shaft) 28. Furthermore, the dust collecting member is disposed on a side opposite to a side on which the first sliding portion 271qa and the second sliding portion 271qb abut on the first shaft member (the motor shaft) 28. The adhesive member 271s is disposed on the base portion 271qc of the sliding portion that connects this first sliding portion 271qa to the second sliding portion 271qb, a lens side of the piezo element holding portion 271c and side walls substantially facing the lens side, respectively.

Moreover, the sliding part base portion 271qc provided with this adhesive member 271s is disposed at a position substantially corresponding to a position of the piezo element 10 in the optical axis direction, the piezo element being disposed on an opposite side via the first shaft member 28. Since the dust collecting member 271r and the adhesive member 271s are arranged in the vicinity of a place where the shavings are generated in this manner, the shavings are collected by the dust collecting member 271r on a piezo element 10 side. Moreover, the shavings which have not been collected stick to the adhesive member 271s disposed on the side walls. The shavings on the first sliding portion 271qa and the second sliding portion 271qb stick to the adhesive member 271s disposed on the sliding part base portion 271qc. The shavings can effectively be prevented from being flied or scattered.

Moreover, it is important not only to collect the generated shavings but also to prevent the shavings from being generated. The surface of a portion of the first shaft member (the motor shaft) 28 on which the operating portion 15 of the piezo element 10 abuts is treated to be rougher than the surface which does not abut as described above. Alternatively, a frictional coefficient of the portion of the first shaft member 28 which abuts on the first sliding portion 271qa and the second sliding portion 271qb is set to be lower than that of the portion which abuts on the operating portion 15. Furthermore, the surface of the first shaft member (the motor shaft) 28 on which the first sliding portion 271qa and the second sliding portion 271qb slide is subjected to a lubricating treatment, and the lubricating treatment of the first shaft member on the side of the operating portion 15 of the piezo element 10 is omitted. By constructing like this, the driving can more effectively be performed by the piezo element 10. Moreover, the first sliding portion 271qa and the second sliding portion 271qb can effectively slide more smoothly.

FIG. 11 is an exploded perspective view of the first lens holding frame 26 which holds the third lens unit. The first lens holding frame 26 integrally holds the second lens unit 3, and is constituted of a third lens unit holder 38 attached to a main body 261 of the first lens holding frame; a piezo element urging spring member 262 held by the main body 261 of the first lens holding frame 26; a flexible substrate 263; a position detecting member 264 for detecting a position of this first lens holding frame 26 and the like. These constituting members are substantially the same as those of the second lens holding frame 27 shown in FIG. 7.

Among the members, in the same manner as in the piezo element urging spring member 272 of the second lens holding frame 27, the piezo element urging spring member 262 is constituted of a first elastic member 262a to urge the piezo element 10 held by the first lens holding frame main body 261 in a direction in which the operating portion 15 of the piezo element 10 abuts on the first shaft member 28, the direction substantially crossing the optical axis direction at right angles; a second elastic member 262b which urges the piezo element 10 in the optical axis direction; an insulating member 262c in which a resin or the like is used so that the second elastic member 262b does not come into contact with the piezo element 10 to be conductive; insulating member engagement pins 262d for engaging the insulating member 262c with the second elastic member 262b and the like. The insulating member 262c is fixed to the second elastic member 262b by passing the insulating member engagement pins 262d through hole portions made in the second elastic member 262b and the insulating member 262c to caulk the pins, or preparing the second elastic member 262b and the insulating member 262c by outsert molding. The piezo element urging spring member 262 is fixed to the second lens holding frame main body 261 by an engagement system in the same manner as in the second lens holding frame 27.

Moreover, the other constituting components are the same as those of the second lens holding frame 27. An end portion 263a of the flexible substrate 263 is fixed to the camera module main body 24. The substrate 263 of the first lens holding frame 26 is configured that 263b becomes a lower portion, to be vertically reverse to that of the second lens holding frame 27. The portion can expand and contract along with the vertical movement of the first lens holding frame 26. As shown in the sectional view of FIG. 9(B), a U-shaped portion 263c bypasses a portion of the second elastic member 262b of the piezo element urging spring member 262, and is connected to a terminal (not shown) on the side of the operating portion 15 of the piezo element 10 to supply power.

Furthermore, the main body 261 of the first lens holding frame is provided with a first bearing portion 261a and a second bearing portion 261b through which the first shaft member (the motor shaft) 28 and the second shaft member (the guide shaft) 29 are inserted, and the holder 38 of the third lens unit 4 is also inserted and fixed. Moreover, a constitution in which the operating portion 15 of the piezo element 10 is allowed to abut on the first shaft member (the motor shaft) 28 to vertically move this second lens holding frame 27 driven as described with reference to FIG. 13, and other constitutions of a piezo element holding portion 261c, the first bearing portion 261a, the second bearing portion 261b and the like are the same as those of the second lens holding frame 27.

In the camera module 1 of Embodiment 1 constituted in this manner, when a driving current including a driving signal is applied to the piezo element 10 disposed in the first lens holding frame 26 and the second lens holding frame 27 by a control circuit (not shown), the operating portion 15 vibrates to energize a reciprocating motion as described above. The first lens holding frame 26 and the second lens holding frame 27 which hold this piezo element 10 can be moved upwards or downwards to perform focal length changing such as zooming, and focusing.

When the common first shaft member (the motor shaft) 28 and second shaft member (the guide shaft) 29 are inserted in the first lens holding frame 26 and the second lens holding frame 27 to constitute the camera module 1 in this manner, the camera module 1 can be constituted to be small and light. Moreover, a signal current can simply be applied to the piezo element 10 to perform auto-focusing (AF) and change the focal length. In addition, as described above, the piezo element 10 has advantages that the piezo element is operated at a low speed but with a high torque, has excellent response and controllability, can finely be positioned and are small and light. Therefore, it is possible to provide the camera module which is small and light and which is capable of changing the focal length and performing the focusing in a short time.

### [Embodiment 2]

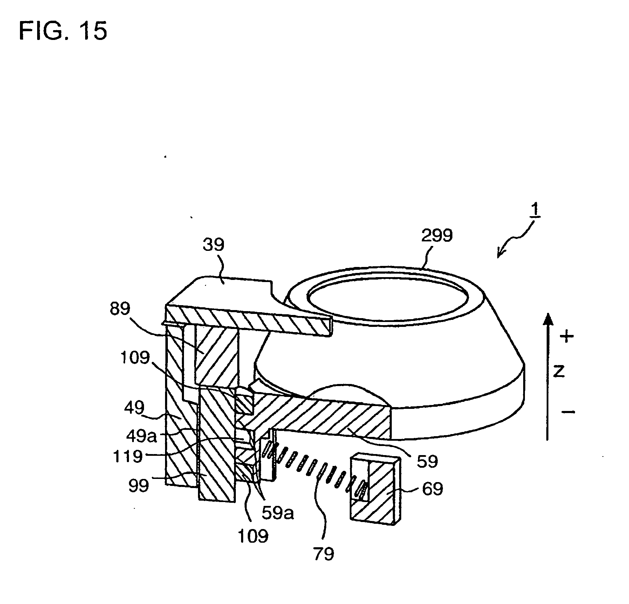

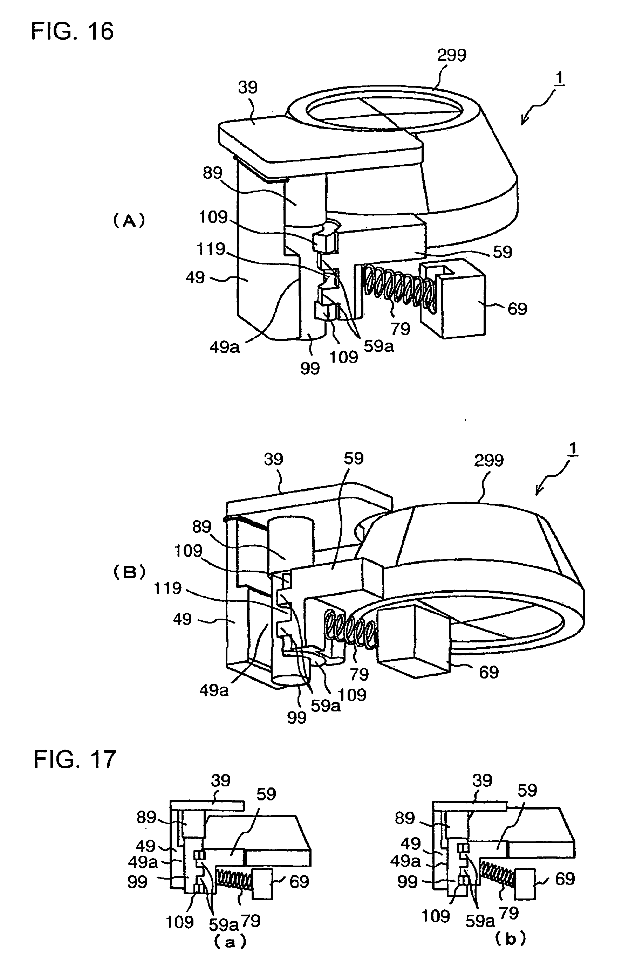

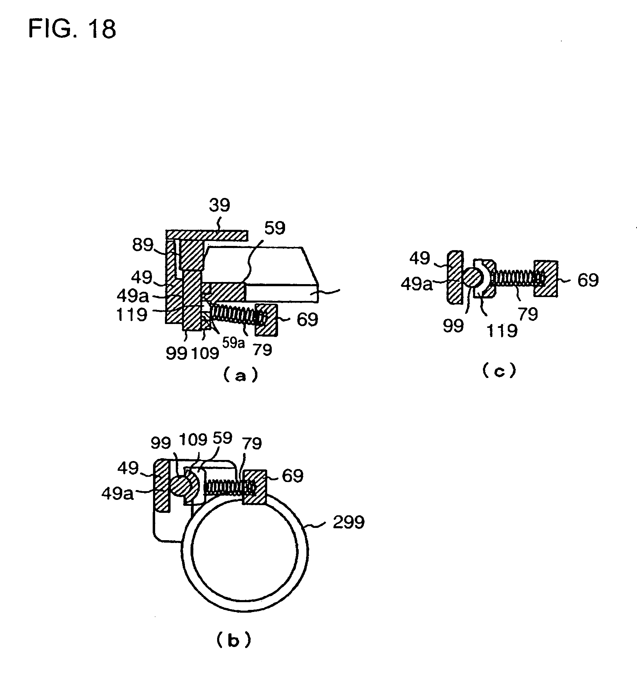

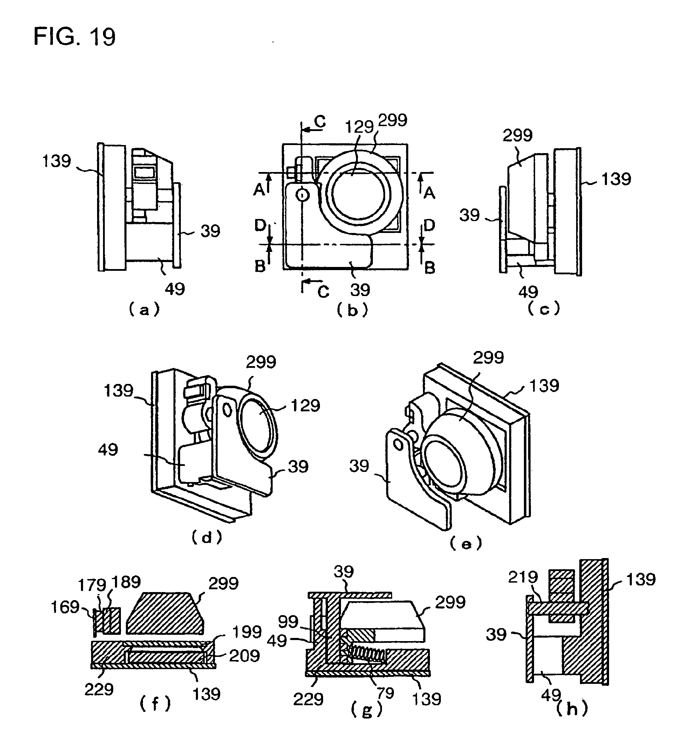

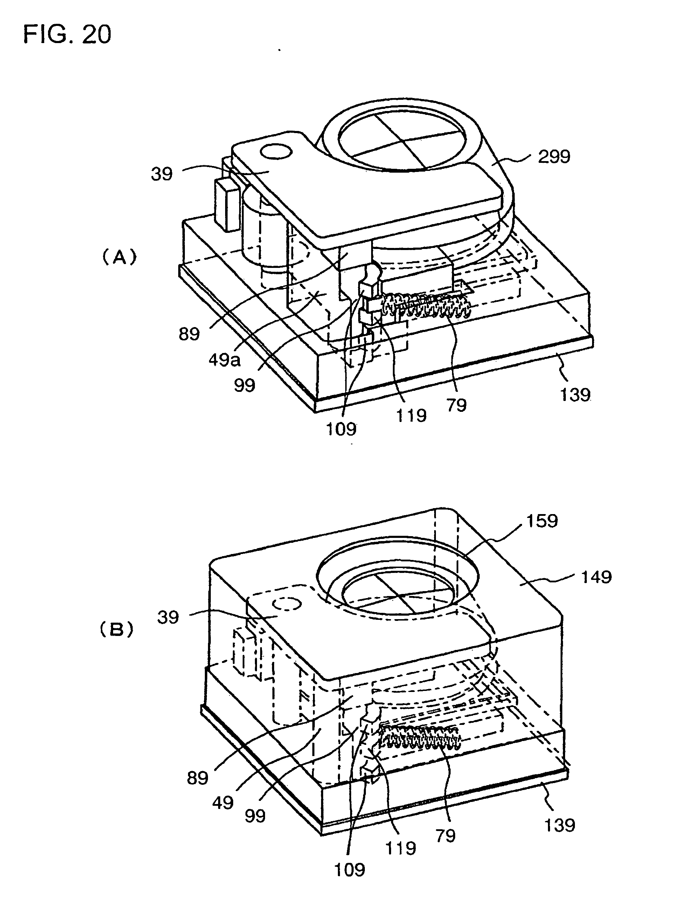

FIG. 15 is a schematic sectional view of a camera module showing a driving portion according to Embodiment 2; FIG. 16 shows a perspective view (A) of the camera module of FIG. 15 as viewed from a subject-side lens, and a perspective view (B) viewed from an image pickup element side; FIG. 17 is an operation explanatory view of the camera module according to the present embodiment, shows a state (a) in which the lenses are arranged at a telephoto position (tele), and similarly shows a state (b) in which the lenses are arranged at a wide-angle position (wide); FIG. 18 shows diagrams of an abutment state between a sliding member and a driving shaft, and shows a side sectional view (a), a flat sectional view (b) and a main part sectional view (c); FIG. 19 is a structure explanatory view of the camera module according to the present embodiment, and shows a left side view (a), a top plan view (b), a right side view (c), a perspective view (d) viewed from below on the left, a perspective view (e) viewed from above on the right, a sectional view (f) cut along the line A-A of (b), similarly a sectional view (g) cut along the line B-B of (b), and a sectional view (h) cut along the line C-C of (b); FIG. 20 shows a perspective view (A) showing the whole constitution of the camera module according to the present embodiment, and a perspective view (B) in which a cover is attached; and FIG. 21 is a diagram schematically showing one example of an information terminal in which the camera module of Embodiment 2 is incorporated. In the drawings, the same constituting element is denoted with the same reference numeral.

First, a main schematic constitution of a camera module 1 according to Embodiment 2 will be described with reference to FIGS. 15 and 16. As shown in the drawings, the camera module 1 of Embodiment 2 is mainly constituted of a lens holding frame 299 which holds an image pickup lens; a driving shaft 99 which performs a reciprocating motion or an expansion and contraction motion in an axial direction; a sliding member 59 connected to the lens holding frame 299, the driving shaft being configured to frictionally engage with at least a part of the sliding member; an electrostrictive element 89 connected to the driving shaft 99 to position the lens holding frame 299; a stable weight member 39 connected to the electrostrictive element at an end opposite to the driving shaft 99; a fixing frame 49 connected to the stable weight member 39 to regulate movement of the driving shaft 99; a spring member 79 which urges the sliding member 59 toward the driving shaft 99; and a spring receptacle 69 which supports the spring member 79.

A linear actuator which drives and controls a lens holding frame 2 is constituted in order from the stable weight member 39, the electrostrictive element 89 and the driving shaft 99. The stable weight member 39 is fixed to a bonding member having high flexibility (a low natural vibration frequency) so as to absorb rebound due to vibration, prevent a weight from being increased and minimize influences on and from the camera module constituting components. The electrostrictive element 89 is an element of a laminated type which expands and contracts in a direction parallel to an optical axis at a time when a voltage is applied to the element, and represented by a piezo element. The driving shaft 99 is pressed, fixed and bonded to the electrostrictive element 89, or fixed and bonded to the element by use of an adhesive, and expands and contracts in the direction parallel to the optical axis in conjunction with the electrostrictive element 89. The driving shaft 99 is sandwiched between a sliding surface 49a of the fixing frame 49 and a sliding surface 59a of the sliding member 59 connected to the lens holding frame 2. The spring member 79 for pressurizing the sliding surface is disposed between the sliding member 59 and the spring receptacle 69. It is to be noted that as the spring member, in addition to a spring, an elastic member such as a leaf spring which does not exceed a yield point, a plastic spring or a viscous polymer material may be used. That is, the sliding member 59 is pressed by the spring member 79 onto the driving shaft 99, and supported.

Moreover, a load of the spring member 79 is sufficiently smaller than friction between the driving shaft 99 and the sliding member 59, but is sufficient for stabilizing the optical axis of the lens.

A driving mechanism of the first lens unit 2 in Embodiment 2 utilizes a rapid volume change of the electrostrictive element 89 and inertia and frictional force of the driving shaft 99 as a movable member so that high-precision driving is possible with a small size and lenses can precisely be positioned.

A driving principle of a movement operation of the lens by the electrostrictive element is as follows. When the electrostrictive element 89 rapidly elongates, the driving shaft 99 constituting the electrostrictive element 89 simultaneously rapidly moves, a peripheral surface of the driving shaft 99 and the sliding surface 59a of the sliding member 59 connected to the lens holding frame 2 slip, the lens holding frame 2 substantially remains in a position of slippage, and the only driving shaft 99 moves. Subsequently, when the electrostrictive element 89 is slowly contracted, the sliding member 59 involving the lens holding frame 2 moves in a +-direction of a Z-axis (see FIG. 15) owing to surface friction between the peripheral surface of the driving shaft 99 and the sliding surface 59a of the sliding member 59. This expanding and contracting operation is repeated to thereby displace the lens holding frame 2 in the +-direction of the Z-axis. Similarly, after the electrostrictive element 89 is slowly elongated, the element is rapidly contracted. In this case, conversely, the lens holding frame 2 advances in a minus direction of the Z-axis (see FIG. 15). At this time, to displace the electrostrictive element 89, an asymmetric voltage waveform of a rectangular wave or a saw-like wave is input into the electrostrictive element 89 by a control board 139 shown in FIGS. 19, 20 to execute control.

Specifically, in a case where an asymmetric voltage pulse having, for example, a falling time which is at least about four times longer than a rising time is applied to the electrostrictive element 89, when a pulse falls, the driving shaft 99 engaged with the sliding member 59 returns to a departure position owing to a friction between the peripheral surface of the driving shaft 99 and the sliding surface 59a. Therefore, the driving shaft 99 and the sliding member 59 relatively move as much as a displacement at a time when the pulse rises. When the voltage is applied in reverse, this electrostrictive element 89 is deformed in a reverse direction. Therefore, the driving shaft 99 and the sliding member 59 relatively move in the reverse direction. At this time, the spring receptacle 69, the stable weight member 39 and the fixing frame 49 are fixed, and a distal end of the spring member 79 on a driving shaft side turns in one direction.

FIG. 17(a) shows a state in which the lens holding frame 2 is displaced the most in the minus direction of the Z-axis, and FIG. 17(B) shows a state in which the lens holding frame 2 is displaced the most in the plus direction of the Z-axis. A moving range of the lens holding frame 2 can arbitrarily be set in accordance with a length of the driving shaft 99. The lens holding frame 2 can finely move under the control of the linear actuator in a range set based on the driving shaft 99.

When such a signal voltage as to continuously cause deformation is applied to the electrostrictive element in this manner, a relative position of the element is displaced owing to the surface friction between the driving shaft 99 and the sliding member 59 of the lens holding frame 2. Therefore, a driving source of such element has advantages that the source has excellent response and controllability, can finely be positioned, has a holding torque (or a holding force) when not energized, has excellent quietness and is small and light.

An operation principle of the electrostrictive element 89 of the camera module 1 according to Embodiment 2 has been described above. Subsequently, a constitution of the lens holding frame of Embodiment 2 will be described in more detail with reference to FIGS. 18, 19.

FIG. 18 shows diagrams of an abutment state between the sliding member and the driving shaft. As shown in a side sectional view of FIG. 18(a), the sliding member 59 has three concave gaps 119 on a side facing the driving shaft 99. The gaps are disposed at an uppermost end of the sliding member 59, at a lowermost end of the member and between the uppermost end and the lowermost end in the axial direction of the driving shaft 99. These gaps are arranged at predetermined intervals in the axial direction. As shown in a main part sectional view of FIG. 18(c), the gap 119 is formed into a semicircular shape.
As shown in a flat sectional view of FIG. 18(b), dust collecting members 109 each having a fan-like section are disposed in the gaps positioned at the uppermost and lowermost portions. A driving load of the dust collecting member 109 may be sufficiently smaller than friction of the sliding member 59, and may be a sufficient load for collecting shavings. An adhesive member 119 is preferably disposed in the gap between the uppermost portion and the lowermost portion of the sliding member 59.

Surfaces of the sliding member 59 which slide on the driving shaft 99 are two sliding surfaces 59a excluding the gap. Therefore, on a sliding member 59 side, the dust collecting member 109, the sliding surface 59a, the adhesive member 119, the sliding portion 59a and the dust collecting member 109 are arranged in this order, and thicknesses of them in the axial direction are set to be substantially equal to one another. When a section of the sliding member 59 is set to be broader than the sliding surface, flying and scattering of the shavings and the like are inhibited.
Furthermore, as sliding surfaces of the other members, an inner peripheral surface corresponding to an inner circle of a substantially semi-circular dust collecting member 109, and the sliding portion 49a of the fixing frame 49 are sliding surfaces with respect to the driving shaft. At this time, to improve a sliding property and reduce the shavings, a friction with the fixing frame 49 is preferably small. To reduce a driving loss, there is preferably a certain degree of friction with the sliding member 59. As a specific example, the surface of a portion of the driving shaft 99 which abuts on the sliding member 59 may be treated to be rougher than the surface of a portion of the shaft which does not abut. It is also preferable that a frictional coefficient of the driving shaft 99 with the sliding surface 49a of the fixing frame 49 is set to be smaller than that with the sliding surface 59a of the sliding member 59. For example, the driving shaft 99 may be formed of a resin material in which the friction is lowered using polycarbonate blended with fluorine, PPS or the like, and the sliding surface 49a may be coated. Furthermore, it is preferable that the surface of the driving shaft 99 which slides on the sliding surface 49a of the fixing frame 49 is subjected to a lubrication treatment, and the lubrication treatment is omitted from the surface of the driving shaft which slides on the sliding surface 59a of the sliding member 59.

It is to be noted that in Embodiment 2, three gaps are made in the driving shaft in the axial direction, the dust collecting members 109 are arranged in two gaps of the uppermost and lowermost portions of the shaft, and the sliding member 59 frictionally engages with two portions of the driving shaft 99. By providing several sliding portions, the generation of the shavings can be suppressed, and the optical axis of the lens can be stabilized. The adhesive member 119 may be disposed between two dust collecting members 109. In consequence, the adhesive member 119 can be disposed without separately adding any arrangement space of the adhesive member 119.

The camera module of Embodiment 2 is not limited to the above constitution. There is not any restriction on the constitution as long as the dust collecting member 109 is disposed in the vicinity of the sliding member 59. In consequence, even in a case where the shavings are generated by the sliding between the driving shaft 99 and the sliding member 59 and attached objects such as corroded objects generated by a corrosive gas or an acidic gas, the shavings and the attached objects are captured by the dust collecting member 109 disposed in the vicinity of the sliding surface. The lenses can be prevented from being polluted by them as powder dust, and ghost, flare and the like can be prevented from being generated. In addition, even during use for a long time, a frictional force between the driving shaft and the sliding member can stably and appropriately be maintained. An operation defect of a linear actuator can be prevented. Furthermore, according to the present embodiment, a camera module having an auto-focusing (AF) function and a zooming function can be constituted to be small and light. It is to be noted that the vicinity of the sliding member means any position of the sliding member 59 facing the driving shaft 99, and includes a position of the shaft member facing the electrostrictive element 89.

To dispose the dust collecting member 109, the gap is disposed on a side on which the sliding member 59 faces the driving shaft 99, and the dust collecting member 109 may be disposed in this gap. Alternatively, the dust collecting member may be attached to an end of the sliding member 59 in a sliding direction on a side on which the sliding member abuts on the driving shaft 99 or the electrostrictive element 89.

Moreover, the gap is disposed in a direction crossing the sliding direction at right angles on the side on which the sliding member 59 faces the driving shaft 99, and the dust collecting member 109 is disposed in the gap so as to abut on the driving shaft 99. In consequence, space can be saved, and the module can be miniaturized. The gaps of the sliding member 59 are disposed in at least two portions on opposite sides of the driving shaft 99 in the axial direction, and the dust collecting members 109 are disposed in the two gaps, respectively. The dust collecting members are disposed at upper and lower end portions of the driving shaft in which the shavings are easily generated in this manner, so that the shavings can be captured before flying and scattering.

Furthermore, it is preferable that the dust collecting member 109 is disposed at the end portion of the sliding member 59 on the electrostrictive element side, on which the sliding member faces the driving shaft 99 or the peripheral surface of the electrostrictive element 89. When the dust collecting member 109 is disposed at the end portion of the sliding member on the electrostrictive element side, the generated shavings can effectively be captured. Furthermore, it is preferable to dispose the dust collecting members 109 at the end portions of the sliding member 59 not only on the electrostrictive element 89 side but also on an opposite side. In consequence, the dust collecting members 109 are disposed on the opposite end portions of the sliding member 59 in the driving shaft direction, and the dust can more effectively be collected. At this time, when the gaps are disposed at the opposite end portions of the sliding member 59, the dust collecting members 109 may be disposed in the gaps. Alternatively, the dust collecting members may be attached to the opposite end portions of the sliding member 59.

Furthermore, the surfaces of the sliding member 59 and the dust collecting member 109 which abut on the driving shaft 99 are formed into substantially semicircular shapes having circuit sections. In consequence, the sliding member 59 can be supported by being urged from only one direction, and a high abutment property on the driving shaft 99 can be maintained. When the dust collecting member 109 is formed so as to have a circular section in the same manner as in the sliding member 59, it is possible to securely capture the shavings generated on the sliding surface between the sliding member 59 and the driving shaft 99, and a dust collecting performance improves.

It is to be noted that as the dust collecting member 109, a material having low resilience, small load, little change with ages and many air layers is selected, and there is not any special restriction on the member as long as the shavings can be captured and held while the member abuts on the driving shaft 99. For example, a foamed member such as a sponge-like member or a fibrous member is preferable, because the member has therein a large number of micro voids. In this structure, the shavings are captured and held by the micro voids. As a material, a foamed polymer material is preferable such as moquette, sponge or urethane. Alternatively, the surface of the dust collecting member facing the driving shaft 99 may be coated with flocked fiber sheet or cloth, or a base may directly be coated with flocked fiber.

Furthermore, two or more gaps are disposed in the sliding member 59 in the axial direction of the driving shaft 99, and the adhesive member 119 is disposed in at least one of the gaps. In consequence, the shavings which cannot completely be collected by the dust collecting member 109 can adhesively be collected by the adhesive member 119, and a dust collecting performance can be further improved.

It is to be noted that there is not any restriction on the adhesive member 119 as long as the member attaches the shavings and floating dust are attached to the surface of the member without abutting on the driving shaft, and an acrylic material having only little change with ages, a rubber-based material usable in a large weight or a silicon-based material useful for heat-resisting use may be used, but an acrylic adhesive material is suitable because it is inexpensive and chemically stable and its structure does not change with ages.

In Embodiment 2, driving control means constituted of the electrostrictive element 89 and the driving shaft 99 is of a frictional driving type. Therefore, when the surface of the driving shaft abuts on the sliding portion 59a of the sliding member 59 and the sliding portion 49a of the fixing frame 49, the shavings are generated, the shavings as the powder dust pollute the lenses to cause the ghost, the flare and the like, and attached objects such as the corroded objects generated by the corrosive gas or the acidic gas are sometimes generated. The dust collecting member 109 is disposed to collect the attached objects, and prevent the objects from being flied or scattered.

In Embodiment 2, as one example, the dust collecting members 109 are disposed in two spaces at the upper and lower portions of the sliding member 59 in the axial direction. Furthermore, the adhesive member is disposed in the space 119 at one place in the vicinity of the center of the sliding member in the axial direction. When the dust collecting members 109 and the adhesive member are arranged in the vicinity of the place where the shavings are generated, the shavings can be collected by the dust collecting member 109, attached to the adhesive member and effectively prevented from being flied and scattered.

Moreover, it is important not only to collect the shavings generated in this manner but also to prevent the shavings from being generated. As described above, the surface of the portion of the driving shaft 99 which abuts on the sliding surface 49a of the fixing frame 49 may be smoothened, and the surface of the driving shaft 99 which abuts on the sliding surface 59a of the sliding member 59 may be treated more roughly so that the shavings are not generated on the surface which is not provided with the dust collecting member 109 or the adhesive member.

As described above, Embodiment 2 of the camera module shown in FIGS. 15 to 18 has a constitution for driving the single lens holding frame 2. When such a camera module is prepared for each of a plurality of lenses constituting, for example, a zoom lens and each lenses are driven at predetermined positions in accordance with a focal length, it is possible to constitute a camera module capable of simultaneously performing the zooming and the focusing.

Moreover, when the camera module of Embodiment 2 is used as a single-focus camera module and an image pickup element such as a CCD is prepared at a focal position of each lens, it is possible to apply the module to an information terminal such as a cellular phone provided with a camera function including the auto-focusing function, a monitoring camera or the like.

Embodiment 2 in this case is shown in FIGS. 19, 20. FIGS. 19, 20 showing a camera module are structure explanatory views of one example in which the above-described camera module is combined with an image pickup element such as the CCD to constitute a single-focus independent camera module. FIG. 19(a) is a left side view, (b) is a top plan view, (c) is a right side view, (d) is a perspective view viewed from below on the left, (e) is a perspective view viewed from above on the right, (f) is a sectional view cut along the line A-A of (b), (g) is similarly a sectional view cut along the line B-B of (b), and (h) is a sectional view cut along the line C-C of (b).

Moreover, FIG. 20(A) shows the camera module 1 in which the above image pickup lens, the lens movement mechanism and various types of electrical components are assembled and adjusted, and FIG. 20(B) is a diagram showing this camera module 1 covered with a cover 149.

In FIGS. 19, 20, since the same constituting elements as those of FIGS. 15 to 18 described above are denoted with the same reference numerals, description thereof is omitted. In the drawings, reference numeral 139 is a substrate on which an image pickup element such as the CCD is mounted; 149 is the cover of the camera module; 159 is an exposed portion of a lens; 169 is a communication FPC electrically connected to a portable device such as an information terminal on which this camera module is mounted; 179 is a hall element for detecting a position of a lens holding frame 2; 189 is a magnet for the hall element 179; 199 is a filter for protecting an image pickup element 209; and 219 is a guide shaft for holding the hall element 173 and the like.

In this camera module shown in FIGS. 19, 20, a fixing frame 49 of the camera module described with reference to FIGS. 15 to 18 is fixed to a substrate 229 disposed on the substrate 139 as shown in FIG. 19(g). Furthermore, the shaft 219 for moving the hall element 179 and the magnet 189 fixed to the lens holding frame 299 is similarly fixed to the substrate 229 as shown in FIG. 19(h) to also serve as a guide of a stable weight member 39.

Moreover, as shown in a sectional view of FIG. 19(f), an image pickup element 209 such as the CCD and the filter 199 are stored in the substrate 229, and the whole constitution is covered with the cover to constitute the camera module as shown in FIG. 20.

When the camera module is constituted in this manner, as described with reference to FIGS. 15 to 18, the lens holding frame 299 can be driven by the electrostrictive element 89. The present position of a lens holding frame 29 of the module can correctly be detected by the hall element 179 and the magnet 189. Therefore, it is possible to provide the camera module which is of a single-focus type and very small but which is capable of correctly performing focusing at a high speed.

FIG. 21 shows one example of the information terminal on which the camera module 1 described above is mounted. The information terminal shown in FIG. 21 shows a cellular phone 50 as one example. In the drawing, 51 is an operating portion (an operating member) and 52 is a display (a display member). FIG. 21 is a plan view showing a state (an open state) in which these operating portion (the operating member) 51 and the display (the display member) 52 are visible. In the shown cellular phone 50, a first case section 53 including the mounted operating portion 51 is connected to a second case section 54 including the mounted display 52 via a hinge mechanism 55. The first and second case sections 53 and 54 are rotatable around the hinge mechanism 55. It is to be noted that the first and second case sections 53 and 54 constitute a case article.

As shown by broken double circular lines in the drawing, the camera module 1 described above is incorporated in the second case 54. When a predetermined button of the operating portion 51 is operated, image pickup is performed by the camera module 1, and an image picked up is displayed in, for example, the display 52. It is to be noted that an upper part of the camera module 1 shown in FIG. 15 is directed to the outside of the second case portion 54. That is, the second case section 54 is provided with an opening in which a first lens unit 2 held by a third lens holding portion 20 of the camera module 1 is exposed. As not shown, a battery, a communication unit or the like is stored in the first case section 53. Furthermore, a thickness of the second case section 54 is substantially regulated by a height of the camera module 1.

### Industrial Applicability

It is possible to constitute a small and light camera module in which an auto-focus (AF) function and a zoom function are incorporated, and the camera module is optimum as a camera module to be incorporated in various small portable terminals and information terminals.

## Claims

1. A camera module (1) comprising:
a lens holding section (27) which holds at least one or more optical lenses (4) and which includes a shaft hole portion (271 a);
a shaft member (28) which is inserted into the shaft hole portion (271 a) and which is substantially disposed in parallel with an optical axis, wherein the lens holding section (27) is arranged to be able to slide along the shaft member (28);
a piezo element (10) incorporated in the lens holding section (27) and including, at an end portion thereof, an operating portion (15) which abuts on the shaft member (28), the element (10) being disposed in the vicinity of the shaft hole portion (271 a) of the lens holding section (27);
**characterised by** an adhesive member (271 s) disposed on an inner side of the shaft hole portion (271 a), wherein an arrangement position of the adhesive member (271 s) in the shaft hole portion (271 a) substantially corresponds, in an optical axis direction, to an arrangement position of the operating portion (15) of the piezo element (10), which is disposed on an opposite side via the shaft member (28).

2. The camera module (1) according to claim 1, wherein
the shaft hole portion (271 a) communicates with a holding portion (271 c) of the piezo element (10) on a side on which the piezo element (10) is disposed; and
the adhesive members (271s) are arranged on a base portion (271 qc) substantially facing the operating portion (15) of the piezo element (10), a side wall on a lens side and a side wall substantially facing the lens side.

3. The camera module (1) according to claim 1, wherein a dust collecting member (271 r) is disposed on a side on which the operating portion (15) in the shaft hole portion (271 a) abuts on the shaft member (28).

4. The camera module (1) according to claim 1, wherein
the shaft hole portion (271 a) surrounds the shaft member (28);
a sliding portion (271 q) which abuts on the shaft member (28) is disposed on one side; and
the operating portion (15) of the piezo element (10) is disposed on an opposite side of the sliding portion (271 q) via the shaft member (28).

5. The camera module (1) according to claim 1, wherein the surface of an abutment portion of the shaft member (28) on the operating portion (15) is treated to be rougher than the surface of a non-abutment portion of the shaft member (28).

6. The camera module (1) according to claim 1, wherein the lens holding section (27) includes:
a first elastic member (272a) which urges the piezo element (10) in a direction substantially crossing an optical axis direction at right angles so that the operating portion (15) abuts on the shaft member (28); and
a second elastic member (272b) which urges the operating portion (15) in the optical axis direction.

7. A portable terminal (50) comprising:
the camera module (1) according to claim 1;
an operation member (51);
a display (52);
a battery;
a communication unit; and
a housing which stores the camera module (1), the operation member (51), the display (52), the battery and the communication unit and which has a thickness limited substantially to a height of the camera module (1).

8. A camera module (1) comprising:
an electrostrictive element (89);
a driving shaft (99) which is connected to the electrostrictive element (89) on one end side in an axial direction and which performs a reciprocating motion or an expanding and contracting motion in the axial direction by a voltage applied to the electrostrictive element (89);
a lens holding section (299) connected to a sliding member (59) which is arranged to be able to slide along the driving shaft (99) and which frictionally engages with at least a part of a peripheral surface of the driving shaft (99);
**characterised by** an adhesive member (119) disposed in the vicinity of the sliding member (59), wherein a gap is disposed in a direction crossing a sliding direction at right angles on a side on which the sliding member (59) faces the driving shaft (99), and the adhesive member (119) is disposed in the gap.

9. The camera module (1) according to claim 8, wherein a dust collecting member (109) is disposed at an end portion of the sliding member (59) on a side of the electrostrictive element (89) so as to face the driving shaft (99) or a peripheral surface of the electrostrictive element (89).

10. The camera module (1) according to claim 8, wherein
gaps of the sliding member (59) are disposed at two or more portions of the driving shaft (99) in the axial direction; and
a dust collecting member (109) is disposed in at least one of the gaps.

11. The camera module (1) according to claim 8, wherein
gaps of the sliding member (59) are disposed at least at two portions of the driving shaft (99) on opposite ends in the axial direction; and
dust collecting members (109) are disposed in the two gaps, respectively.

12. The camera module (1) according to claim 8, wherein the sliding member (59) frictionally engages with the driving shaft (99) at two places.

13. The camera module (1) according to claim 12, wherein the adhesive member (119) is disposed between the two places.

14. The camera module (1) according to claim 8, wherein the surface of an abutment portion of the driving shaft (99) on the sliding member (59) is treated to be rougher than the surface of a non-abutment portion of the driving shaft (99).

15. An information terminal (50) comprising:
the camera module (1) according to claim 8 or 9;
an operation member (51);
a display (52);
a battery;
a communication unit; and
a housing which stores the camera module (1), the operation member (51), the display (52), the battery and the communication unit and which has a thickness limited substantially to a height dimension of the camera module (1).

## Patentansprüche

1. Kameramodul (1) mit
einem Linsenhalteabschnitt (27), der wenigstens eine oder mehrere optische Linsen (4) hält und einen Wellenlochabschnitt (271a) aufweist,
einem Wellenglied (28), das in den Wellenlochabschnitt (271a) eingeschoben und im Wesentlichen parallel zu einer optischen Achse angeordnet ist, wobei der Linsenhalteabschnitt (27) dazu ausgelegt ist, längs des Wellenglieds (28) verschoben zu werden,
einem Piezoelement (10), das in den Linsenhalteabschnitt (27) eingebaut ist und an seinem Endabschnitt einen Betriebsabschnitt (15) aufweist, der an das Wellenglied (28) anstößt, wobei das Element (10) in der Nähe des Wellenlochabschnitts (271 a) des Linsenhalteabschnitts (27) angeordnet ist,
**gekennzeichnet durch** ein Klebeelement (271s), das an einer Innenseite des Wellenlochabschnitts (271a) angeordnet ist, wobei eine Anbringungsposition des Klebeelements (271s) in dem Wellenhalteabschnitt (271a) in Richtung einer optischen Achse im Wesentlichen einer Anbringungsposition des Betriebsabschnitts (15) des Piezoelements (10) entspricht, das bezüglich des Wellenglieds (28) auf einer entgegengesetzten Seite angeordnet ist.

2. Kameramodul (1) nach Anspruch 1, wobei
der Wellenlochabschnitt (271a) mit einem Halteabschnitt (271 c) des Piezoelements (10) auf einer Seite, auf der das Piezoelement (10) angeordnet ist, kommuniziert, und
die Klebeelemente (271s) auf einem Basisabschnitt (271qc) angeordnet sind, der dem Betriebsabschnitt (15) des Piezoelements (10), einer Seitenwand auf einer Linsenseite und einer der Linsenseite im Wesentlichen gegenüber stehenden Seitenwand im Wesentlichen gegenüber steht.

3. Kameramodul (1) nach Anspruch 1, wobei ein Staubsammelelement (271 r) auf einer Seite angeordnet ist, auf der der Betriebsabschnitt (15) in dem Wellenlochabschnitt (271 a) gegen das Wellenglied (28) anstößt.

4. Kameramodul (1) nach Anspruch 1, wobei
der Wellenlochabschnitt (271a) das Wellenglied (28) umgibt,
ein Gleitabschnitt (271q), der gegen das Wellenglied (28) anstößt, auf einer Seite angeordnet ist, und
der Betriebsabschnitt (15) des Piezoelements (10) auf einer Seite des Gleitabschnitts (271q) angeordnet ist, der bezüglich des Wellenglieds (28) gegenüber stehend angeordnet ist.

5. Kameramodul (1) nach Anspruch 1, wobei die Fläche eines Anstoßabschnittes des Wellenglieds (28) gegen den Betriebsabschnitt (15) behandelt ist, um rauher zu sein als die Fläche eines nicht-anstoßenden Abschnittes des Wellenglieds (28).

6. Kameramodul (1) nach Anspruch 1, wobei der Linsenhalteabschnitt (27) aufweist:
ein erstes elastisches Glied (272a), das das Piezoelement (10) in eine Richtung drückt, die eine Richtung der optischen Achse im Wesentlichen im rechten Winkel schneidet, so dass der Betriebsabschnitt (15) gegen das Wellenglied (28) anstößt, und
ein zweites elastisches Glied (272b), das den Betriebsabschnitt (15) in Richtung der optischen Achse drückt.

7. Tragbares Endgerät (50) mit
dem Kameramodul (1) nach Anspruch 1,
einem Betriebselement (51),
einer Anzeige (52),
einer Batterie,
einer Kommunikationseinheit und
einem Gehäuse, in dem das Kameramodul (1), das Betriebselement (51), die Anzeige (52), die Batterie und die Kommunikationseinheit untergebracht sind und dessen Dicke im Wesentlichen auf eine Höhe des Kameramoduls (1) begrenzt ist.

8. Kameramodul (1) mit
einem elektrostriktiven Element (89),
einer Antriebswelle (99), die an das elektrostriktive Element (89) auf einer Endseite in einer Axialrichtung angeschlossen ist und die eine Hin- und Herbewegung oder eine Expansions- und Kontraktionsbewegung in der Axialrichtung durch eine an das elektrostriktive Element (89) angelegte Spannung ausführt,
einem Linsenhalteabschnitt (299), der an ein Gleitelement (59) angeschlossen ist, das dazu ausgelegt ist, längs der Antriebswelle (99) zu gleiten und in Reibungseingriff mit wenigstens einem Teil einer Umfangsfläche der Antriebswelle (99) zu sein,
**gekennzeichnet durch** ein in der Nähe des Gleitelements (59) angeordnetes Klebeelement (119), wobei eine Lücke in einer eine Gleitrichtung im rechten Winkel schneidenden Richtung auf einer Seite vorgesehen ist, auf der das Gleitelement (59) der Antriebswelle (99) gegenüber steht, und das Klebeelement (119) in der Lücke angeordnet ist.

9. Kameramodul (1) nach Anspruch 8, wobei ein Staubsammelelement (109) an einem Endabschnitt des Gleitelements (59) auf einer Seite des elektrostriktiven Elements (89) so angeordnet ist, dass es der Antriebswelle (99) oder einer Umfangsfläche des elektrostriktiven Elements (89) gegenüber steht.

10. Kameramodul (1) nach Anspruch 8, wobei
Lücken des Gleitelements (59) an zwei oder mehr Abschnitten der Antriebswelle (99) in der Axialrichtung angeordnet sind und
ein Staubsammelelement (109) in wenigstens einer der Lücken angeordnet ist.

11. Kameramodul (1) nach Anspruch 8, wobei
Lücken des Gleitelements (59) an wenigstens zwei Abschnitten der Antriebswelle (99) an entgegengesetzten Enden in der Axialrichtung angeordnet sind und
Staubsammelelemente (109) jeweils in den zwei Lücken angeordnet sind.

12. Kameramodul (1) nach Anspruch 8, wobei das Gleitelement (59) an zwei Stellen in Reibungseingriff mit der Antriebswelle (99) ist.

13. Kameramodul (1) nach Anspruch 12, wobei das Klebeelement (119) zwischen den zwei Stellen angeordnet ist.

14. Kameramodul (1) nach Anspruch 8, wobei die Fläche eines Anstoßabschnittes der Antriebswelle (99) auf dem Gleitelement (59) so behandelt ist, dass sie rauher ist als die Fläche eines nicht-anstoßenden Abschnitts der Antriebswelle (99).

15. Informationsendgerät (50) mit
dem Kameramodul (1) nach Anspruch 8 oder 9,
einem Betriebselement (51),
einer Anzeige (52),
einer Batterie,
einer Kommunikationseinheit und
einem Gehäuse, in dem das Kameramodul (1), das Betriebselement (51), die Anzeige (52), die Batterie und die Kommunikationseinheit untergebracht sind und dessen Dicke im Wesentlichen auf eine Höhenerstreckung des Kameramoduls (1) begrenzt ist.

## Revendications

1. Module de caméra (1) comprenant :
une section de support de lentille (27) qui supporte au moins une ou plusieurs lentilles optiques (4) et qui comprend une partie de trou pour tige (271a) ;
un élément de tige (28) qui est inséré dans la partie de trou pour tige (271a) et qui est disposé de manière sensiblement parallèle à un axe optique, la section de support de lentille (27) étant agencée pour pouvoir coulisser le long de l'élément de tige (28) ;
un élément piézoélectrique (10) incorporé dans la section de support de lentille (27) et comprenant, à une partie d'extrémité de celui-ci, une partie d'actionnement (15) qui s'appuie sur l'élément de tige (28), l'élément (10) étant disposé à proximité de la partie de trou pour tige (271a) de la section de support de lentille (27) ;
**caractérisé par** un élément adhésif (271s) disposé sur un côté intérieur de la partie de trou pour tige (271a), dans lequel une position d'agencement de l'élément adhésif (271s) dans la partie de trou pour tige (271a) correspondant sensiblement, dans une direction d'axe optique, à une position d'agencement de la partie d'actionnement (15) de l'élément piézoélectrique (10), qui est disposé sur un côté opposé par l'intermédiaire de l'élément de tige (28).

2. Module de caméra (1) selon la revendication 1, dans lequel
la partie de trou pour tige (271a) communique avec une partie de support (271c) de l'élément piézoélectrique (10) sur un côté sur lequel est disposé l'élément piézoélectrique (10) ; et
les éléments adhésifs (271s) sont agencés sur une partie de base (271qc) sensiblement en face de la partie d'actionnement (15) de l'élément piézoélectrique (10), une paroi latérale sur un côté de lentille et une paroi latérale faisant sensiblement face au côté de lentille.

3. Module de caméra (1) selon la revendication 1, dans lequel un élément de collecte de poussière (271r) est disposé sur un côté sur lequel la partie d'actionnement (15) dans la partie de trou pour tige (271a) s'appuie sur l'élément de tige (28).

4. Module de caméra (1) selon la revendication 1, dans lequel
la partie de trou pour tige (271a) entoure l'élément de tige (28) ;
une partie coulissante (271q) qui s'appuie sur l'élément de tige (28) est disposée sur un premier côté ; et
la partie d'actionnement (15) de l'élément piézoélectrique (10) est disposée sur un côté opposé de la partie coulissante (271q) par l'intermédiaire de l'élément de tige (28).

5. Module de caméra (1) selon la revendication 1, dans lequel la surface d'une partie d'appui de l'élément de tige (28) sur la partie d'actionnement (15) est traitée pour être plus rugueuse que la surface d'une partie de non-appui de l'élément de tige (28).

6. Module de caméra (1) selon la revendication 1, dans lequel la section de support de lentille (27) comprend :
un premier élément élastique (272a) qui pousse l'élément piézoélectrique (10) dans une direction croisant sensiblement une direction d'axe optique à angle droit de sorte que la partie d'actionnement (15) s'appuie sur l'élément de tige (28) ; et
un second élément élastique (272b) qui pousse la partie d'actionnement (15) dans la direction d'axe optique.

7. Terminal portable (50) comprenant :
le module de caméra (1) selon la revendication 1 ;
un élément d'actionnement (51) ;
un écran d'affichage (52) ;
une batterie ;
une unité de communication ; et
un boîtier qui contient le module de caméra (1), l'élément d'actionnement (51), l'écran d'affichage (52), la batterie et l'unité de communication et qui a une épaisseur se limitant sensiblement à une hauteur du module de caméra (1).

8. Module de caméra (1) comprenant :
un élément électrostrictif (89) ;
une tige d'entraînement (99) qui est reliée à l'élément électrostrictif (89) sur un premier côté d'extrémité dans une direction axiale et qui effectue un mouvement alternatif ou un mouvement de dilatation et de contraction dans la direction axiale par une tension appliquée à l'élément électrostrictif (89) ;
une section de support de lentille (299) reliée à un élément coulissant (59) qui est agencé pour pouvoir coulisser le long de la tige d'entraînement (99) et qui vient en prise par frottement avec au moins une partie d'une surface périphérique de la tige d'entraînement (99) ;
**caractérisé par** un élément adhésif (119) disposé à proximité de l'élément coulissant (59), un espace étant disposé dans une direction croisant une direction de coulissement à angle droit sur un côté sur lequel l'élément coulissant (59) fait face à la tige d'entraînement (99), et l'élément adhésif (119) étant disposé dans l'espace.

9. Module de caméra (1) selon la revendication 8, dans lequel un élément de collecte de poussière (109) est disposé au niveau d'une partie d'extrémité de l'élément coulissant (59) sur un côté de l'élément électrostrictif (89) de manière à faire face à la tige d'entraînement (99) ou à une surface périphérique de l'élément électrostrictif (89).

10. Module de caméra (1) selon la revendication 8, dans lequel
des espaces de l'élément coulissant (59) sont disposés au niveau de deux parties, ou plus, de la tige d'entraînement (99) dans la direction axiale ; et
un élément de collecte de poussière (109) est disposé dans au moins un des espaces.

11. Module de caméra (1) selon la revendication 8, dans lequel
des espaces de l'élément coulissant (59) sont disposés au niveau d'au moins deux parties de la tige d'entraînement (99) sur des extrémités opposées dans la direction axiale ; et
des éléments de collecte de poussière (109) sont disposés respectivement dans les deux espaces.

12. Module de caméra (1) selon la revendication 8, dans lequel l'élément coulissant (59) vient en prise par frottement avec la tige d'entraînement (99) en deux emplacements.

13. Module de caméra (1) selon la revendication 12, dans lequel l'élément adhésif (119) est disposé entre les deux emplacements.

14. Module de caméra (1) selon la revendication 8, dans lequel la surface d'une partie d'appui de la tige d'entraînement (99) sur l'élément coulissant (59) est traitée pour être plus rugueuse que la surface d'une partie de non-appui de la tige d'entraînement (99).

15. Terminal d'informations (50) comprenant :
le module de caméra (1) selon la revendication 8 ou 9 ;
un élément d'actionnement (51) ;
un écran d'affichage (52) ;
une batterie ;
une unité de communication ; et
un boîtier qui contient le module de caméra (1), l'élément d'actionnement (51), l'écran d'affichage (52), la batterie et l'unité de communication et qui a une épaisseur se limitant sensiblement à une dimension de hauteur du module de caméra (1).
